(19) Europäisches Patentamt
European Patent Office
Office européen des brevets

(11) **EP 2 274 815 B1**

(12) **EUROPEAN PATENT SPECIFICATION**

(45) Date of publication and mention
of the grant of the patent:
**29.03.2017 Bulletin 2017/13**

(21) Application number: **09742943.5**

(22) Date of filing: **22.01.2009**

(51) Int Cl.:
**H02K 1/02** *(2006.01)* **H02K 47/20** *(2006.01)*
**H02P 9/14** *(2006.01)*

(86) International application number:
**PCT/SG2009/000028**

(87) International publication number:
**WO 2009/136868 (12.11.2009 Gazette 2009/46)**

(54) **ELECTRICAL GENERATOR AND ELECTRICITY GENERATION SYSTEM**

STROMGENERATOR UND STROMERZEUGUNGSSYSTEM

GÉNÉRATEUR ÉLECTRIQUE ET SYSTÈME DE GÉNÉRATION D'ÉLECTRICITÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **06.05.2008 PCT/SG2008/000169**

(43) Date of publication of application:
**19.01.2011 Bulletin 2011/03**

(73) Proprietors:
• **Tay, Boon Hou**
**Singapore 438814 (SG)**
• **Hingert, Win**
**Yangon (MM)**

(72) Inventors:
• **Tay, Boon Hou**
**Singapore 438814 (SG)**
• **Hingert, Win**
**Yangon (MM)**

(74) Representative: **Wheatley, Alison Clare**
**Haseltine Lake LLP**
**Redcliff Quay**
**120 Redcliff Street**
**Bristol BS1 6HU (GB)**

(56) References cited:
**EP-A2- 0 673 105 WO-A2-2008/027378**
**US-A- 4 916 907 US-A- 4 916 907**
**US-A1- 2007 125 094 US-A1- 2007 125 095**

Printed by Jouve, 75001 PARIS (FR)

## Description

### Field of the Invention

The present invention relates to an electrical generator and an electricity generation system. More particularly, the present invention relates to an electrical generator that utilises inherent magnetic properties of its component parts to efficiently increase the quantity of generated electrical current.

### Background of the Invention

In this specification, where a document, act or item of knowledge is referred to or discussed, this reference or discussion is not an admission that the document, act or item of knowledge or any combination thereof was at the priority date:

(i) part of common general knowledge; or
(ii) known to be relevant to an attempt to solve any problem with which this specification is concerned.

Electromagnetic energy is an efficient mode of power transmission, due to the near light-speed velocity of the constituent electric and magnetic fields. Electricity is commonly generated at a power plant and transmitted to consumers via combinations of one or more of: step-up transformers; tie lines (being the interconnecting lines between power plants); transmission lines; step-down transformers; sub-transmission lines; high voltage primary distribution feeders and distribution transformers; and low voltage transmission lines. Excess energy generated at the plant or during the course of transmission, typically cannot be effectively stored and is therefore normally loss as heat. It would be advantageous for electricity generation systems to service varying demands for electrical energy whilst maintaining quality and reliability standards and minimizing the generation of excess energy.

Moreover, the bulk of electrical power is currently generated from fossil fuel (including natural gas, coal, crude oil etc) combustion. Fossil fuel supplies are of course limited and the release of carbon dioxide into the atmosphere during combustion is known to contribute to global warming.

Therefore, it would also be advantageous to improve the efficiency of power generation to lessen the reliance on fossil fuel combustion.

Further, many power plants are connected together by tie lines into a transmission grid formation. Power stability is crucial in transmission grids, to ensure that additional demand from one location does not destabilise the grid in other locations. It is therefore also desirable for electrical generators to maintain a terminal voltage and load frequency notwithstanding varying demands for electrical power.

The choice of load frequency of either 50 Hz or 60 Hz is dependent on the standards adopted for different grids. Generators, motors, and transformers in 50 Hz systems tend to be bigger than comparable components of a 60 Hz system, whereas transmission lines and transformers for 50 Hz systems tend to achieve lower impedance ratings than 60 Hz systems.

The present invention aims to overcome or at least ameliorate one or more of the deficiencies of the prior art discusses above.

### Summary of the Invention

According to a first aspect of the present invention there is provided an electrical generator comprising a stator composed at least partly of a material having metamagnetic properties and having coil means connected to an external electrical load, and a rotor having an electromagnet for generating a magnetic field therein, movement of the rotor and magnetic field relative to the stator inducing electrical current flow in the coil means, the electromagnet configured to generate a magnetic field of sufficient strength to interact with a magnetic field associated with the external electrical load and induce metamagnetism within the metamagnetic material of the stator to increase electrical current flow within the coil means.

Metamagnetism is a physical state of matter characterised by a superlinear increase of magnetisation over a narrow range of magnetic field. The present invention utilises the metamagnetic properties of certain materials to increase the efficiency of electricity generation, and thereby overcomes one or more of the deficiencies of the prior art noted above.

Moreover, an electromagnet is deployed as a magnetising means on the rotor, the magnetic flux of which is controllable and adjustable to enable metamagnetic interaction to take place between the rotor and stator. Permanent magnets are not used for this purpose on the rotor, as their magnetic flux is fixed and tends to not be strong enough to induce metamagnetism in the metamagnetic material of the stator.

Preferably, the rotor is composed at least partly of another material having non-metamagnetic properties. This is necessary in order to isolate the remainder of the rotor from the profound metamagnetic interaction occurring between the electromagnet and the stator. Typically, the other material has a higher magnetic permeability than the metamagnetic material for these purposes.

Similarly, the other material may have a fully saturated magnetic flux density irrespective of whether or not the metamagnetic material of the stator has metamagnetism induced therein. This also serves to provide additional magnetic isolation between the rotor and stator.

Materials including Permalloy, Silicon Iron, Pure Iron, Relay Steel or an iron equivalent are suitable for this purpose.

Optimally, the magnetic flux density and magnetic field strength of the metamagnetic material of the stator increases superlinearly when metamagnetism is induced therein.

According to preferred embodiments the metamagnetic material is a magnetic material that enters a metamagnetic state responsive to an applied magnetic field.

Materials such as Alnico V, Stelloy, or a Stelloy equivalent are suitable for this purpose.

Typically, the other material and metamagnetic material respectively comprise a pair selected from the group comprising: Permalloy and Alnico V; Permalloy and Stelloy; Silicon Iron and Alnico V; Silicon Iron and Stelloy; Pure Iron and Alnico V; Pure Iron and Stelloy; Relay Steel and Alnico V; Relay Steel and Stelloy; and an iron equivalent and a Stelloy equivalent.

The electromagnet may comprise first and second diametrically opposed pairs of poles. According to preferred embodiments, the poles have a cross-sectional area that applies a uniform beam of magnetic flux from each pole when the rotor is viewed in plan, and a uniform plane beam when the rotor is viewed in elevation.

The stator may take the form of a substantially hollow cylinder, with the coil means provided at selected location(s) on the interior wall thereof. The coil means may also be provided in longitudinally extending slot(s) formed in the interior wall of the hollow cylinder. The stator may enclose the rotor so as to minimise magnetic flux leakage between the two. An outer casing may also enclose the stator.

According to preferred embodiments, the coil means comprises parallel, insulated, untwisted, thin, and circular cross-sectional multi-strand wires located within the longitudinally extending slots in a manner that each wire is subjected to a uniform magnetic flux.

Typically, the coil means are operatively connected so as to generate alternating current of a selected phase such that the part with coil means provide an overall three-phase Alternating Current (AC) output.

In particularly preferred embodiments, the angular velocity of the rotor, and thereby the frequency of the generated electrical current, remains substantially constant notwithstanding the metamagnetic interaction between the rotor and the stator. These embodiments are particularly suitable for addressing the power stability issues in transmission grids referred to above.

According to a second aspect of the present invention there is provided an electricity generation system comprising:

an electrical generator according to the first aspect of the invention;

energy supply means for supplying magnetic energy to the electromagnet and mechanical energy to the rotor, said magnetic energy and mechanical energy being supplied to the generator independently of the electrical current generated by the generator.

The energy supply means may comprise:

a motor; and

a belt assembly operatively connecting the rotor to the motor, rotating motion of the motor being transferred to the rotor via the belt assembly.

Alternatively, the energy supply means may comprise:

a motor; and

a transmission assembly operatively connecting the rotor to the motor, rotating motion of the motor being transferred to the rotor part via the transmission assembly.

Alternatively, the energy supply means may comprise:

a motor;

a gear train assembly operatively connecting the rotor to the motor, rotating motion of the motor being transferred to the rotor via the gear train assembly;

a DC power source driven by the gear train assembly; and

a relay switch or a Switchgear operatively connecting the electromagnet to the DC power source.

The electricity generation system may further include an adjuster for connecting the belt assembly, gear train or transmission assembly to the motor so as to overcome inertia of movable parts during system start-up.

According to preferred embodiments, the adjustor is a clutch that is configured to selectively engage or disengage the motor to and from the belt assembly, gear train or transmission assembly.

The electricity generation system may further include a counterweight in the belt assembly, gear train or transmission assembly for ensuring that movable parts are in static and dynamic balance and to smooth out any jerk or slack encountered during motion of movable parts.

Typically, the motor is an AC motor rather than a diesel engine or the like. This enables the electricity generation system to be cascaded. Use of a belt assembly or a transmission assembly ensures the motor is not connected directly to the electrical generator. An indirect connection enables the motor to gain a desired rotational speed and power before it is coupled to the electrical generator.

In other words, during system start-up, the electrical generator is mechanically and electrically isolated from the motor. Once coupled, the gear-ratio in the belt assembly or transmission assembly provides a means to allow the motor to rotate at high speed and also to enable the electrical generator to turn at either 25 Hz or 30 Hz (due to the use of a four-pole rotor that provides two cycles of voltage per revolution).

The counterweight of the belt assembly and the gear train of the transmission assembly each provide a dynamic balance between the motor and the electrical generator. At steady state, conservation of angular momentum enables the counterweight of the belt assembly and the gear train of the transmission assembly to smooth out any jerk or slack that may be encountered from the movable parts.

Embodiments of the electricity generation system that include a gear train assembly, the gears are typically threaded firmly and secured by lock nuts on the motor shaft. In turn these gears mesh with other gears that are also threaded and secured by lock nuts onto the shaft of the electrical generator.

The motor can be seen as being in direct mechanical connection with the electrical generator via the gear train.

Alternatively, a single plate clutch can be adopted to connect the motor shaft and the respective gears, to allow a time delay in the form of limited slip, to enable the motor to build up speed during system start-up.

When the relay switch (or Switchgear) is inactive, no electrical supply is provided for the electromagnet of the electrical generator, and Faraday's Law of electromagnetic induction therefore cannot take place. The inactive state of the relay switch (or Switchgear) ensures that the electrical generator is electrically isolated at system start-up, such that the motor need only overcome the inertia of the rotor inside the electrical generator.

When the rotor has attained a desired rotational speed, the relay switch (or Switchgear) is activated to produce three-phase AC output via Faraday's Law of electromagnetic induction.

The gear train also provides a dynamic balance between the motor and the electrical generator. At steady state, conservation of angular momentum enables the gear train to smooth out any jerk or slack associated with the various moving parts.

According to a third aspect of the present invention there is provided an integrated electricity generation system comprising two or more operatively connected electricity generation systems according to the second aspect of the invention, so as to increase the electrical output of a single unit.

The electricity generation systems may be connected in series, parallel or in a combination of the two.

According to a fourth aspect of the present invention, there is provided an electrical distribution network including one or more electricity generation systems according to the second aspect of the invention configured so as to provide power stability to selected parts of the electrical distribution network.

According to a fifth aspect of the present invention, there is provided an automotive engine including one or more electrical generators according to the first aspect of the invention.

According to a sixth aspect of the invention there is provided a marine vessel including an automotive engine according to the fifth aspect of the invention.

According to a seventh aspect of the invention, there is provided an electricity generation system comprising two or more operatively connected electrical generators according to the first aspect of the invention.

**Brief Description of the Drawings**

The present invention will now be further explained and illustrated by reference to the accompanying drawings in which:

Figure 1 is a perspective view of an electricity generation system according to a first embodiment of the present invention;

Figure 2 is a cross-sectional schematic view of the electrical generator component of the system illustrated in Figure 1;

Figure 3 is a schematic illustration of the stator coils of the generator generation, shown connected in a Y-connection;

Figure 4 is a close up view of the electrical generator illustrated in Figures 1 and 2 running at no or negligible load;

Figure 5 is a close up view of the electrical generator illustrated in Figures 1 and 2 the flux created when the stator runs at full load;

Figure 6 is a close up view of the flux distribution during metamagnetic interaction between the stator and rotor of the electrical generator;

Figure 7 is a schematic illustration of stimulated emission of magnetic fields within the stator's magnetic material;

Figure 8 is an isometric view, partly in cross section, of a rotor turning inside a cylindrical stator, wherein both the rotor and stator include thin, insulated laminations of magnetic material.

Figure 9 shows the saturation curves of a particular conjugate pair of a non-metamagnetic material and a metamagnetic material.

Figure 10 shows the presence of large eddy currents induced in the magnetic structures of the electrical generator without thin, insulated laminations.

Figure 11 shows the reduction in eddy currents when the magnetic structures of the electrical generator are split into thin, insulated laminations.

Figure 12 is an elevation view, partly in cross section, of an electricity generation system according to a second embodiment of the present invention;

Figure 13 is a flow chart showing the operation of a control unit with touch-screen display suitable for use with the electricity generation system according to the second embodiment of the present invention.

Figure 14 is a perspective view of an electricity generation system according to a third embodiment of the present invention.

Figure 15 is an elevation view of a single plate clutch that connects a shaft of a Prime Mover to a respective gear of a gear train.

Figure 16 is a pictorial sectional view of a friction plate used inside the single plate clutch illustrated in Figure 15.

Figure 17 is a flow chart showing the operation of a control unit with touch-screen display suitable for use with the electricity generation system according to the third embodiment of the present invention.

**Detailed Description of the Drawings**

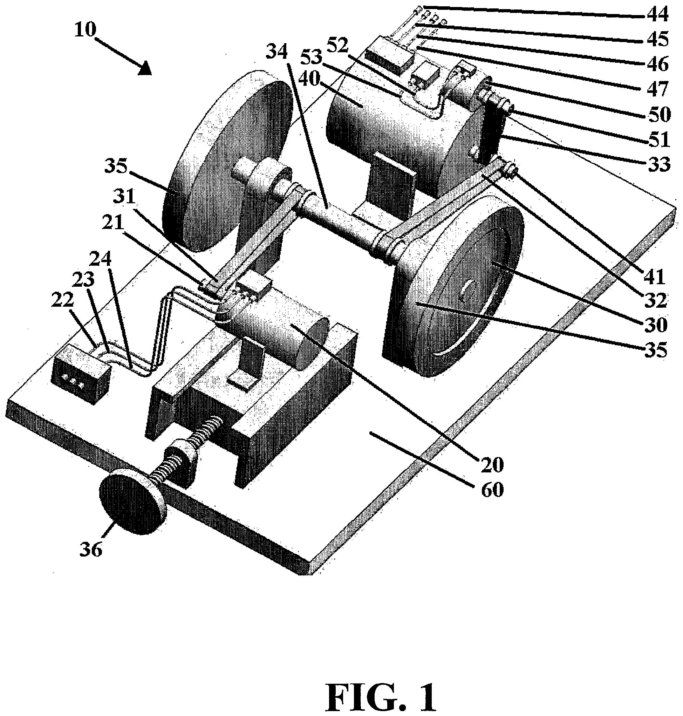

Referring now to the drawings, wherein like reference numerals designate identical or corresponding parts throughout several views and more particularly to Fig. 1, wherein the electricity generation system 10, according to the present invention includes Prime Mover 20, Conveyor-belt System 30, Electrical generator 40, Exciter 50, and Platform 60.
The electrical generator 40 takes the form of a Meta-magnetic Effect Dynamo.
Prime Mover 20 is an AC (Alternating Current) Motor. The alternating current (AC) provided from an external power source is used to generate mechanical torque to rotate a magnet in a coil of wire, or rotate a coil of wire inside a powerful magnet. In either case, the generated mechanical torque is used to rotate the Shaft 21 of Prime Mover 20. While only one type of Prime Mover 20 is shown, the Prime Mover 20 could also be a single-phase Alternating Current (AC) Motor, or a DC (Direct Current) Motor with a DC to AC Converter for its electrical input power.

Adoption of an AC Motor for Prime Mover 20 enables the entire electricity generation system of the present invention to be cascaded.

The input power cables 22, 23, 24 of Prime Mover 20 can be connected to an external generator such as a fossil fuel-fired steam turbine, a natural gas-fired steam turbine, a hydro-generator, a diesel engine, a petrol engine, a steam engine, a Fuel-cell Generator, an AC or DC generator that uses alternative sources of energy (such as solar, wind, hydro-electric, wave energy, or biomass), and any electricity generation unit that can provide the required AC or DC power to drive Prime Mover 20 used in the present invention.

Conveyor-belt System 30 uses conveyor belts to transfer the rotational energy from Prime Mover 20 to Meta-magnetic Effect Dynamo 40 and Exciter 50. Conveyor-belt 31 connects Shaft 21 of Prime Mover 20 to the Intermediate Shaft 34. Conveyor-belt 32 connects the Intermediate Shaft 34 to the Shaft 41 of Meta-magnetic Effect Dynamo 40. Conveyor-belt 33 connects the Shaft 41 of Meta-magnetic Effect Dynamo 40 to the Shaft 51 of Exciter 50. Intermediate Shaft 34 ensures the Shaft 41 of Meta-magnetic Effect Dynamo 40 turns at either 25 Hz or 30 Hz (due to the use of a four-pole Rotor that provides two cycles of voltage per revolution) when driven by Shaft 21 of Prime Mover 20.

Counter-weight 35 ensures the operation of the Conveyor-belt system 30 is both statically and dynamically balanced. Adjuster 36 serves as a Clutch. It is loosened to disengage Prime Mover 20 from Conveyor-belt system 30 in order for Prime Mover 20 to attain the required idling rotational speed when it is first started. It is tightened to engage Prime Mover 20 to Conveyor-belt system 30 when the required idling rotational speed is established.

Exciter 50 is an Alternator that generates the DC power needed by Meta-magnetic Effect Dynamo 40. It consists of three major components: the rotor, the stator, and the rectifier bridge with regulator. The principle of AC generation in Alternator is motion between magnetic lines of force, and conductors will induce electrical pressure (AC Voltage). In the Alternator, the rotor will supply the magnetic lines of force, and the Conveyor-belt 33 spinning the rotor will supply the motion. The generated AC power is converted into DC power by the rectifier bridge with regulator. DC Power generated by Excitor 50 is supplied to Meta-magnetic Effect Dynamo 40 via Output Power Cable 53 (Positive DC Voltage) and Output Power Cable 52 (Ground).

While only one type of Exciter 50 is shown, Exciter 50 can be any DC power source including a battery or a fuel cell.

Meta-magnetic Effect Dynamo 40 is a synchronous machine that is driven by Conveyor-belt 32. It uses a metamagnetic effect to generate power from within the magnetic structure of its Stator 42.

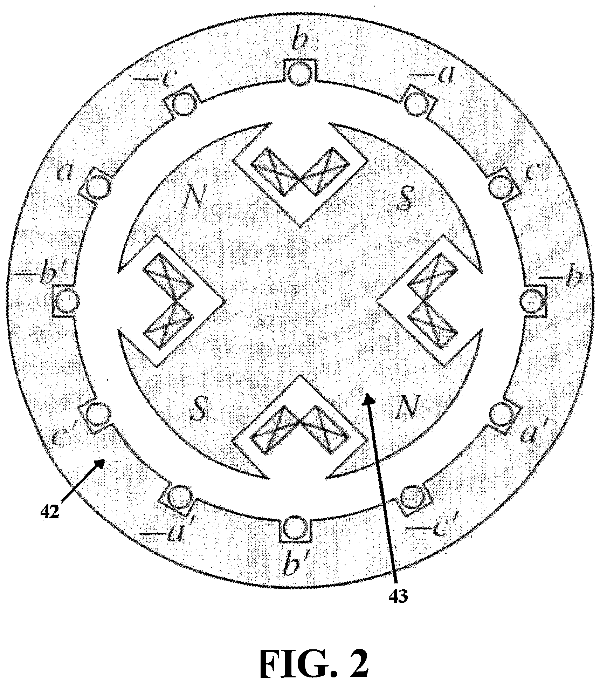

Fig. 2 illustrates the Meta-magnetic Effect Dynamo 40. Two principal parts of a synchronous machine are magnetic structures. The stationary part that is essentially a hollow cylinder, called the Stator 42, has longitudinal slots in which there are coils of Stator windings. These windings carry the current supplied to an electrical load. Rotor 43 is the part of the machine that is mounted on the shaft and rotates inside the hollow Stator 42. The winding on Rotor 43, called the field winding, is supplied with DC current from Exciter 50.

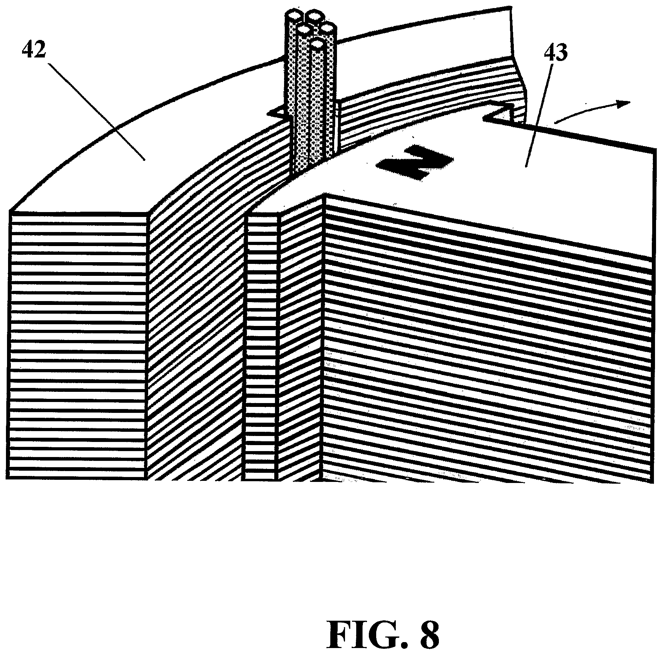

Rotor 43 is a single, longitudinal block with a uniform four-pole cross section area as shown in Fig. 8.

Rotor 43 has four poles and two cycles of voltage are generated in each coil per revolution. Since the number of cycles per revolution equals the number of pairs of poles, the frequency of the generated voltage is derived from the following equation:

$$f = (P/2) * (N/60) = (P/2) * fm \ \ Hz$$

where,

f = electrical frequency in Hz

P = number of poles

N = Rotor speed in revolutions per minutes (rpm)

fm = N/60, the mechanical frequency in revolutions per second (rps), it is the frequency of Shaft 41 driven by Conveyor-belt 32.

Therefore, when the four-pole Rotor 43 turns at 25 Hz (where P = 4, N/60 = 25), the electrical frequency f is:

$$f = 4/2 * 25 = 2 * 25 = 50\,\text{Hz}$$

At 30 Hz, the electrical frequency f is:

$$f = 4/2 * 30 = 2 * 30 = 60\,\text{Hz}$$

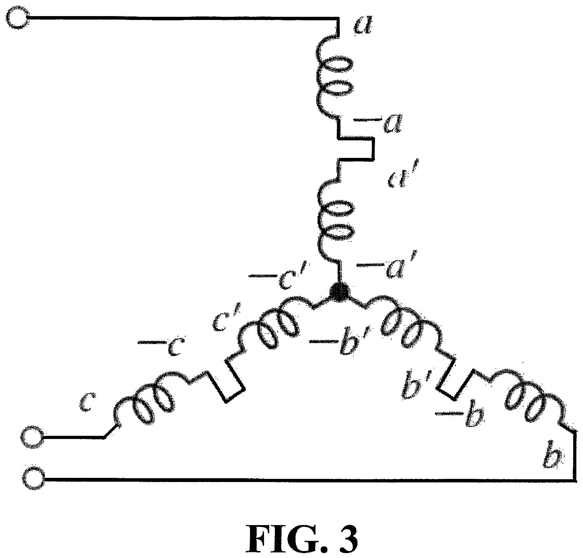

As shown in Fig. 2, opposite sides of Stator 42's Coil, are in a and a' 180 degree apart. Similar coils are in slots b and b' and c and c'. Coil sides in slots a, b, and c are 60 degree apart. The two coils of each phase may be connected in series or in parallel. Fig. 3 shows the Y-connection of Stator 42's Windings where two coils of each phase is connected in series. The Y-connection Stator 42's Windings enables three-phase AC Power to be generated as output. The conductors shown in the slots indicate a coil of only one turn, but such a coil may have many turns as shown in Fig. 8.

Whenever a magnetic flux (symbol $\Phi$) exists in a body or a component, it is due to the presence of a magnetic field strength (symbol H), given by

$$H = U / 1$$

Where

H = magnetic field strength [A/m]
U = magnetomotive force (mmf) acting on the component [A] or [ampere turn]
1 = length of the component [m]

The resulting magnetic flux density (symbol B) is given by

$$B = \Phi / A$$

Where

B = magnetic flux density [T]
$\Phi$ = flux in the component [Wb]
A = cross section of the component [m2]

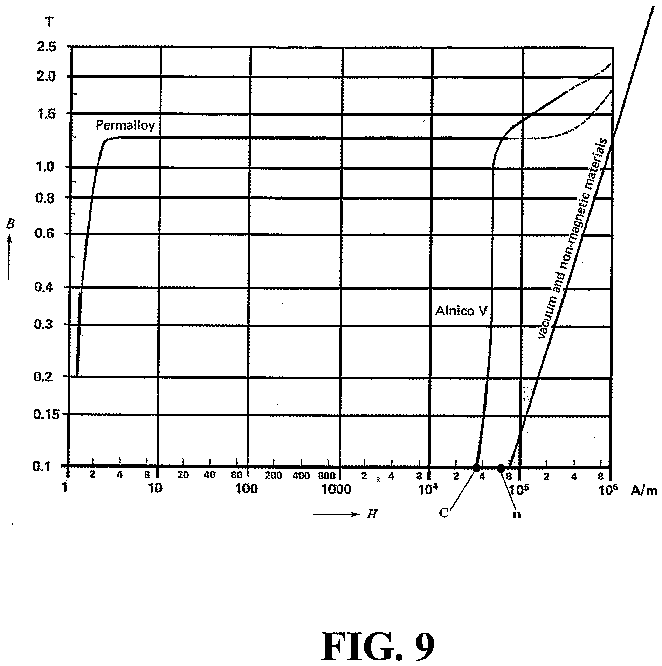

There is a definite relationship between the magnetic flux density (symbol B) and the magnetic field strength (symbol H) of any material. This relationship is usually expressed graphically by the B-H curve of the material as shown in Fig. 9.

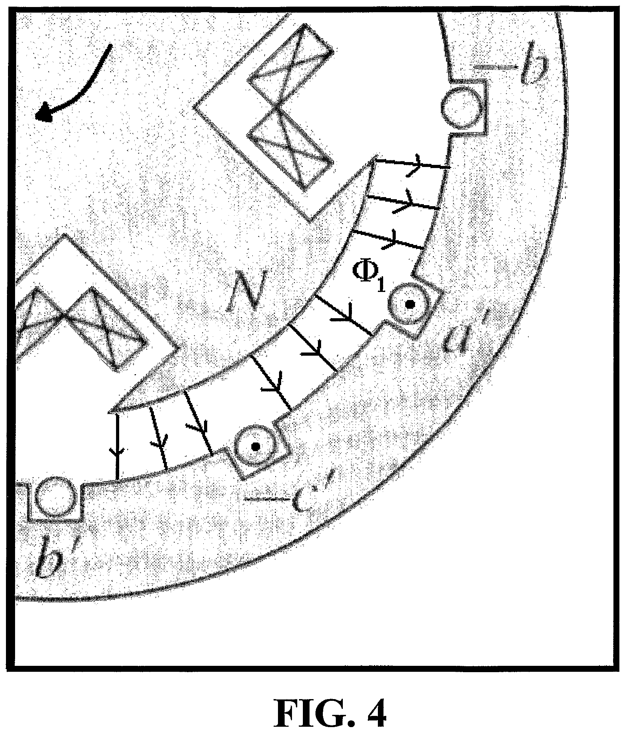

In Fig.4, Meta-magnetic Effect Dynamo 40 runs at no load. The small current induced in the Stator 42's Windings does not appreciably affect the flux $\Phi_1$ coming from the pole.

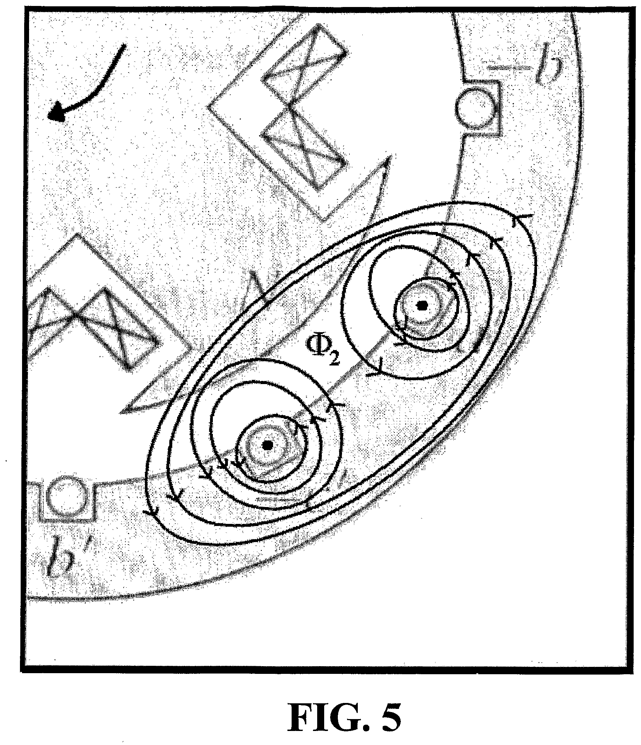

In the presence of an electrical load or loads, the Stator 42 carries its normal current. It produces a strong magneto-motive force that, if it acted alone, would create flux $\Phi_2$ as shown in Fig 5.

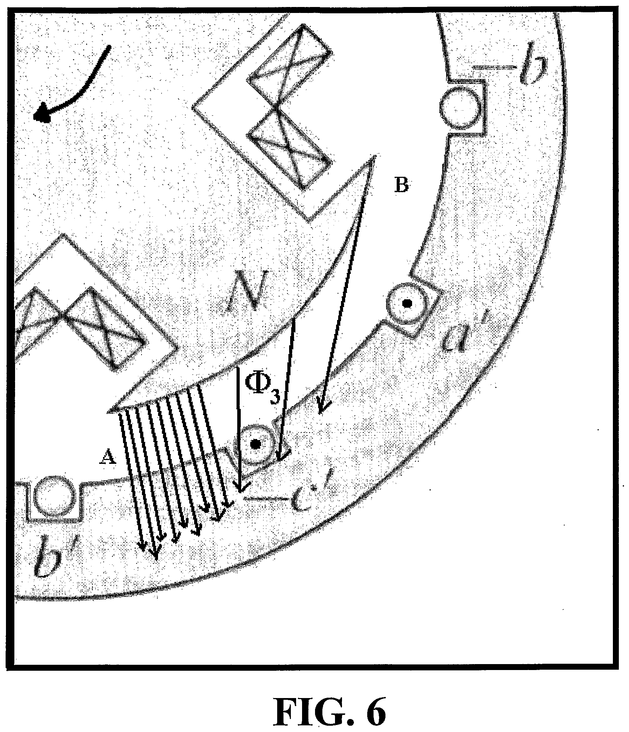

By superimposing $\Phi_1$ and $\Phi_2$, the resulting flux $\Phi_3$ is obtained as shown in Fig. 6. The flux density of flux $\Phi_3$ increases at region A and decreases at region B. Thus, a strong resultant magnetic flux (or Magnetic Flux Density with symbol B) is established at region A.

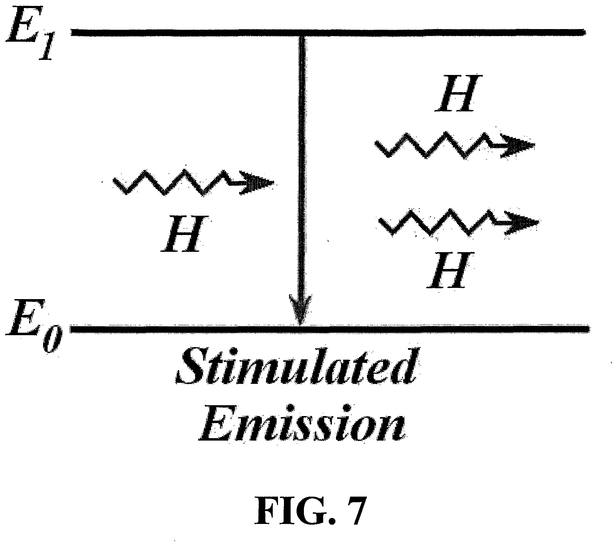

There are five stages associated with the spontaneous magnetic field emission in Electrical Generator 40. Stage 1 is a typical Faraday Law of electromagnetic induction from the Rotor 43 to Stator 42 and the magnetic flux is directed from Rotor 43 to Stator 42 as shown in Fig 4. In Stage 2, additional magnetic flux from current flow (due to the presence of an external load) in the coil means of Stator 42 is directed from Stator 42 to Rotor 43 as shown in Fig 5. In Stage 3, the magnetic flux from Stage 1 interacts with the additional flux from Stage 2 to form a strong resultant magnetic flux (or magnetic flux density with symbol B) that is directed from Rotor 43 to Stator 42 as shown in Figure 6. As the strong magnetic flux penetrates the metamagnetic materials in Stator 42, the definite relationship between magnetic flux density and magnetic field strength causes a very strong magnetic field strength (with symbol H) to be present inside the metamagnetic material of Stator 42. In Stage 4, as shown in Fig 7, this incident magnetic field (symbol H) causes transitions between two energy levels in a magnetic atom where the transition is from E1 to E0 with additional identical and coherent magnetic fields radiated to trigger other magnetic atoms. The discrete energy level between E1 and E0 means that a magnetic atom can only absorb or emit energy in definite amounts and not continuously. This explains why the external applied magnetic field must be of a certain and narrow range. In Stage 5, these coherent magnetic fields within Stator 42 are transformed instantaneously into a strong current flow in the coil means of Stator 42. The relationship between the strong current in Stator 42's windings and these coherent magnetic fields can be established via the application of Ampere's law. Ampere's Law states that magnetomotive force (symbol U) around a closed path of a component is given by the following line integral:

$$\oint_c H.\,dl = i$$

Where

i = induced current passes through the area bounded by the closed path

H = magnetic field strength

H. dl = product of the tangential component of H and the incremental distance dl along the path

In other words, the magnetic energy associated with the enhanced magnetic field is being absorbed and converted into electrical energy by the Stator 42's windings, resulting in more electrical power being generated (in the presence of electrical loads) as compared with the input power supplied to the Prime Mover 20. As the stimulated magnetic fields are coherent to each other, the "extra" AC power generated is in phase with each other and is of the same frequency (50 Hz or 60 Hz). Thus, the generated AC output power is clean and not noisy.

Besides, the strong magnetic flux (generated in Stage 3) from each pole of Rotor 43 is a thin beam when view from the cross-sectional side of Electrical Generator 40 and as a uniform plane beam when view from the elongated side of Electrical Generator 40. As the coil means of Stator 42 are subjected to such a strong and uniform magnetic flux, multi-stranded copper wires that are small, untwisted and parallel to each other are used as shown in Fig. 8. Besides, the use of small and circular cross-sectional wire as compared with a single circular wire or a single flat wire has the advantage of having more surface area for AC current transmission. Each wire is insulated via enamel coating.

In this present prevention, Stator 42 is made of magnetic material or any alloy that can be stimulated by metamagnetic effect relative to the magnetic material used in Rotor 43. Metamagnetic effect is a physical state of matter (such as the magnetic material of Stator 42) characterized by a super-linear increase of magnetization (stimulated emission of magnetic fields within that matter) over a narrow range of an external applied magnetic field (brought about by Magnetic Flux $\Phi_3$ at region A in Fig. 6).

The characteristic feature of Stator 42 's magnetic material is due to the presence of magnetic domains. A magnetic domain is a region of crystalline matter, whose volume may be between $10^{-12}$ and $10^{-8}$ m$^3$, which contains atoms whose magnetic moments are aligned in the same direction. The magnetic moment of a magnetic atom results from the spin of electrons in an unfilled inner shell of the atom. The formation of a magnetic domain depends upon the strong inter-atomic forces (exchange forces) that are effective in a crystal lattice containing magnetic atoms.

In unmagnetized volume of a Stator 42's specimen, the magnetic domains are arranged in a random fashion with their magnetic axes pointing in all directions so that the specimen has no resultant magnetic moment.

Under the influence of a magnetic field, those magnetic domains whose magnetic axes have directions near to that of the field grow at the expense of their neighbours. In this process, the atoms of neighbouring magnetic domains tend to be aligned in the direction of the field but the strong influence of the growing magnetic domains causes their axes to align parallel to its magnetic axis. The growth of these magnetic domains leads to a resultant magnetic moment and hence magnetization of the specimen in the direction of the field.

However, a very strong applied magnetic field triggers stimulated emission within the Stator 42's specimen. Fig. 7 shows the transitions between two energy levels in a magnetic atom by stimulated emission, in which an incident magnetic field (symbol H) causes a transition from E1 to E0. In stimulated emission, the radiated magnetic fields are exactly in phase with the incident ones, so the result is an enhanced beam of coherent magnetic fields and these coherent magnetic fields are converted instantaneously into a strong current flow in Stator 42's windings via the application of Ampere's law.

In other words, the magnetic energy associated with the enhanced magnetic field is being absorbed and converted into electrical energy by the Stator 42's windings, resulting in more electrical power is being generated (in the presence of electrical loads) as compared with the input power supplied to the Prime Mover 20.

The enhanced beam of coherent magnetic field enables the present invention to be used as a device for power stability in an electrical distribution network or in a national grid. When there is a larger load demand, the coherent nature of enhanced magnetic field enables additional electrical power to be generated with no change in phase angle or frequency (50 Hz or 60 Hz). In this way, unanticipated output can be catered for and at the same time, unexpected power trip due to power instability can be avoided.

Law of Conservation of Energy is preserved in this present invention as the "excess" electrical energy with respective to the input energy at Prime Mover 20 is generated from within the Stator 42's magnetic material. The electric attraction between an electron and a proton is in the order of 1039 times greater than the gravitational attraction between them. Thus, a small change in the character of these forces due to relative motion, which is what magnetic forces represent in this present invention, can have large consequences in term of electrical output power. Besides, the coherent magnetic flux means that the "excess" AC power generated is in phase with each other and at the same frequency (50Hz or 60 Hz).

In this present invention, Rotor 43 is made of magnetic material that is invariant to metamagnetic effect. The enhanced magnetic flux in Stator 42 causes saturation to set in pole tip of region A. The increase of flux under the left side of the pole, region A, is only slightly more than the flux when the Meta-magnetic Effect does not take place. Consequently, the magneto-motive force does not increase appreciably in the presence of strong magnetic flux within the Stator 42 at region A, resulting in a constant rotating speed of Rotor 43 that does not increase with electrical loads.

Fig. 9 shows the characteristics of a particular conjugate pair of magnetic material that is applicable for the Electrical Generator 40. The magnetic material used in the magnetising means must be non-metamagnetic relative to the regions entering the metamagnetic state. Non-metamagnetic material is characterized by adoption of magnetic material such as "Permalloy" with high relative permeability (with curve originated more to the left of Fig 9) and its magnetic flux density must be saturated prior and during the regions of the other part with coil means (that uses "Alnico V") entering a metamagnetic state.

When the resultant magnetic flux in Stage 3 (as shown in Fig 6) brings about an incident magnetic field of strength at Point C, it will trigger Metatmagnetic Effect. Between Point C and Point D is the range (or amount) of magnetic field strength that can be stimulated via Metamagnetic interaction. As the emitted magnetic fields are converted into current instantaneously, the amount of magnetic field to be stimulated from the range (between Point C and Point D) will be dependent upon the amount of current needed by the external load.

As "Permalloy" reaches saturation at between Point C and Point D, the spontaneous and super-linear increase in Magnetic Fields within Stator 42 does not affect Rotor 43, resulting in a constant rotating speed of Rotor 43 that does not increase with electrical loads. Rotor 43 is said to be "isolated" from the excessive magnetic flux across the narrow air gap between each pole and its adjacent Stator's region. Other conjugate pairs such as "Permalloy and Stelloy", "Silcon Iron and Alnico V", "Silicon Iron and Stelloy", "Pure Iron and Alnico V", "Pure Iron and Stelloy" are applicable in this regard.

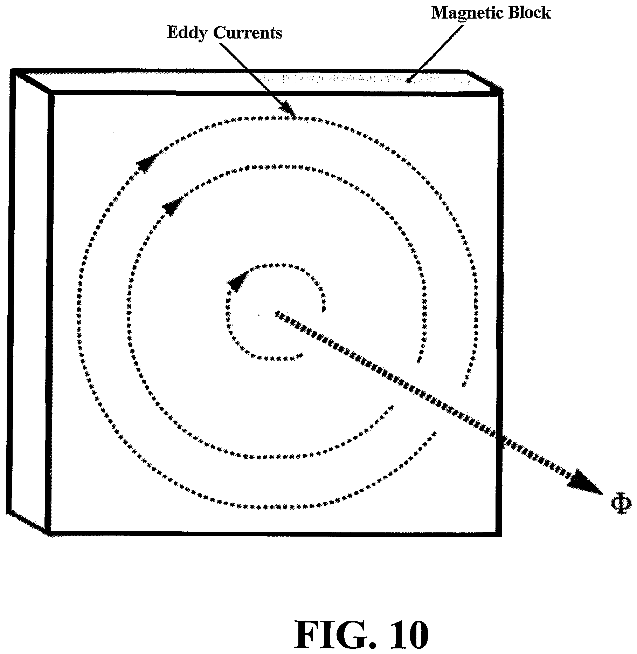

Reducing eddy current is an important consideration for Electrical Generator 40. In Fig. 10, the magnetic structures in both Rotor 43 and Stator 42 are constructed as a single solid magnetic block. When a magnetic flux $\Phi$ passes through this magnetic block, it is basically equivalent to a densely packed set of rectangular conductors touching each other. Eddy currents swirl back and forth inside the block, following the paths shown in the figure. These eddy currents can be very large due to the low resistance of the block. These eddy currents produce large $I^2R$ (where symbol I is the induced eddy current and symbol R is the resistance of the magnetic block) losses that are immediately converted into heat. The power loss is proportional to the square of the rotational speed and the square of the magnetic flux density (symbol B). Consequently, the large magnetic block that is penetrated by magnetic flux $\Phi$ can become very hot (even at a frequency of 50 Hz or 60 Hz), resulting in overheating (also known as eddy-current losses).

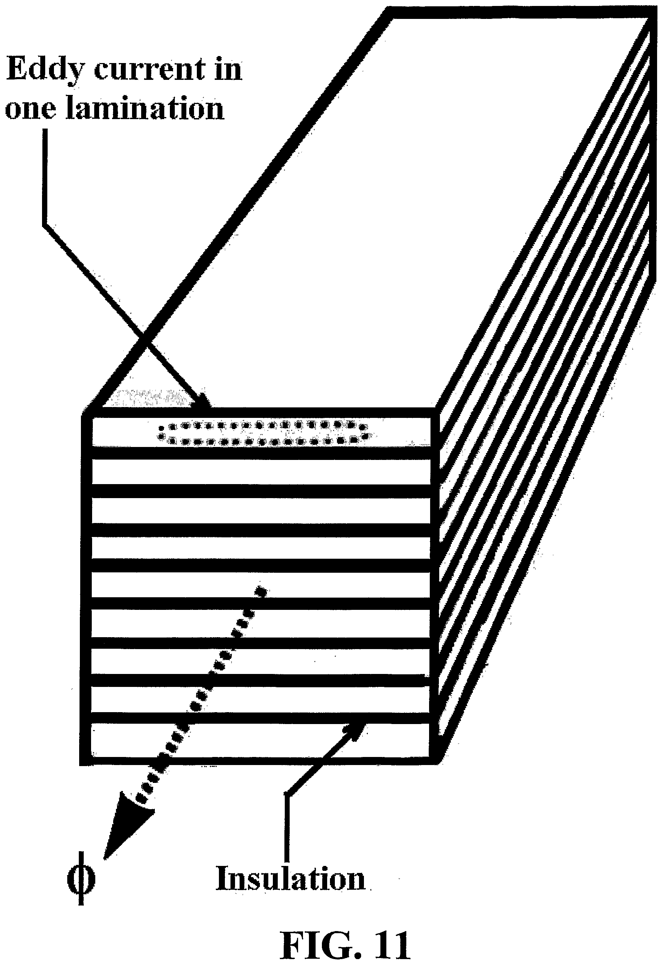

Eddy currents can be reduced tremendously by splitting the magnetic block into thin and insulated laminations as shown in Fig. 11. As the section in each lamination is a fraction of the entire uncut block, the voltage induced is also a fraction of that induced in the entire block, with the result that the eddy currents and the corresponding losses are considerably reduced. For a given magnetic block, the eddy-current losses decrease in proportion to the square of the number of laminations. In the present invention, the magnetic structures of both Rotor 43 and Stator 42 are composed of stacked laminations with a fraction of a millimetre thick. Epoxy/resin is the insulating material used by these laminations.

Turning to Fig. 1, conveyor-Belt System 30 as a whole ensures the input power of the present invention is electrically isolated from its output power. Exciter 50 is driven mechanically by Conveyor-belt 33 from Shaft 41 of Meta-magnetic Effect Dynamo 40. Shaft 41 of Meta-magnetic Effect Dynamo 40 is in turn driven mechanically by Conveyor-belt 32. Exciter 50 does not use the electrical output power of Stator 42. The fact that magnetic saturation sets in at the tip of each pole during Meta-magnetic Effect means that apart from the magneto-motive force needed to turn the Rotor 43, Rotor 43 is "isolated" from excess magnetic flux across the narrow air gap between the each pole and its adjacent Stator 42's region. Therefore, two electrical reference frames are established, one is DC Circuit (that includes Exciter 50 and Rotor 43) for generating the Magneto-motive Force needed by Rotor 43, and the other is the three-phase AC Circuit (that includes the Stator 42's windings and external loads) for generating the Electric Output Power needed by external electrical loads. The establishment of two Electrical Reference Frames in this present invention ensures Conservation of Electric Charge is preserved in each frame. Otherwise, discrepancy occurs when the electric charges in Rotor 43's field windings are less than (that is, not equal) to the electric charges in Stator 42's windings.

Another important feature for the electrical isolation brought about by the establishment of two electrical reference frames enables the Electrical Output via output power cables 44 (Live L1), 45 (Live L2), 46 (Live L3), and 47 (Neutral) of this present invention to be increased further by cascading a group of present inventions in series to increase the output voltage, by connecting a group of present inventions in parallel to increase the output current, or adopting an integrated configuration as a mixture of series and parallel connections to increase the overall voltage and current as needed by an electrical distribution network.

The electrical isolation brought about by the establishment of two electrical reference frames also enables a plurality of single systems or integrated systems to increase the power or to provide power stability in each part of an electrical distribution network or a national grid.

Table 1 illustrates a set of measurement data of an electricity generation system according to this first embodiment of the present invention. Steps 1 to 4 are the initialisation steps needed to power up the electricity generation system. Steps 4 to 8 illustrate the "Power Stability Zone" of Generator 40. In this zone, the angular velocity of the rotor 43 and thereby the frequency of the generated electrical current remains substantially constant under different load conditions. It is important to note that in this zone, there is no need to control the speed of Prime Mover 20 to match the variations in external electrical load connected to the output cables of Electrical Generator 40. In fact, no external control is needed in this zone, the metamagnetic interaction within Stator 42 responds to the variations of external electrical load directly. Besides, further cooling is not needed when operating in Power Stability Zone as both the Prime Mover 20 and Rotor 43 of Electrical Generator 40 are running at their normal and steady speed

Step 9 to 11 illustrates the "Power Enhancement Zone" of Generator 40. In this zone, additional power is needed by Prime Mover 20 in order to maintain the angular velocity of the rotor 43 with respective to increasing load at output of Generator 40.

As shown in Fig. 9, the saturation curve of any magnetic material becomes asymptotic to the B-H curve of vacuum where H is high. The B-H curve of vacuum is a straight line. A vacuum never saturates, no matter how great the flux density may be. Nonmagnetic materials such as copper, paper, rubber, and air have B-H curves almost identical to that of vacuum. Therefore, Prime Mover 20 needs additional power in "Power Enhancement Zone" to produce additional H needed as the magnetic materials used in Electrical Generator 40 approaching the characteristics of vacuum in this particular zone.

Table 1

| Step | Description | Input Power to rated 5 HP Prime Mover 20 according to a first embodiment of the present invention. | Output Power from Generator 40 according to a first embodiment of the present invention. |
|---|---|---|---|
| 1. | Activation of Prime Mover 20 with Exciter 40 off and Adjuster 36 fully loosened. | 1.65 KW | 0 KW |
| 2. | Gradual Tightening of Adjuster 36 to turn Intermediate Shaft 34 and Counterweight 35 from 0 rpm to just before 1500 rpm. Exciter 40 is still OFF. | 1.65 KW to 2.8 KW | 0 KW |
| 3. | Stop tightening of Adjuster 36 when Intermediate Shaft 34 and Counterweight 35 attain 1500 rpm. Exciter 40 is still OFF. | 1.65 KW | 0 KW |
| 4. | ON Exciter 40. | 1.65 KW | 0 KW -- "No Load" condition |
| 5. | 5 KW Load to output terminals of Generator 40. | 1.65 KW to 1.7 KW | 5 KW |
| 6. | 10 KW Load to output terminals of Generator 40. | 1.65 KW to 1.7 KW | 10 KW |
| 7. | 15 KW Load to output terminals of Generator 40. | 1.65 KW to 1.7 KW | 15 KW |

(continued)

| Step | Description | Input Power to rated 5 HP Prime Mover 20 according to a first embodiment of the present invention. | Output Power from Generator 40 according to a first embodiment of the present invention. |
|---|---|---|---|
| 8. | 20 KW Load to output terminals of Generator 40. | 1.65 KW to 1.7 KW | 20 KW |
| 9. | 25 KW Load to output terminals of Generator 40. | 2.5KW to 2.6 KW | 25 KW |
| 10. | 30 KW Load to output terminals of Generator 40. | 3.2 KW to 3.5 KW | 30 KW |
| 11. | 35 KW Load to output terminals of Generator 40 | 3.7 to 3.8 KW | 35 KW |

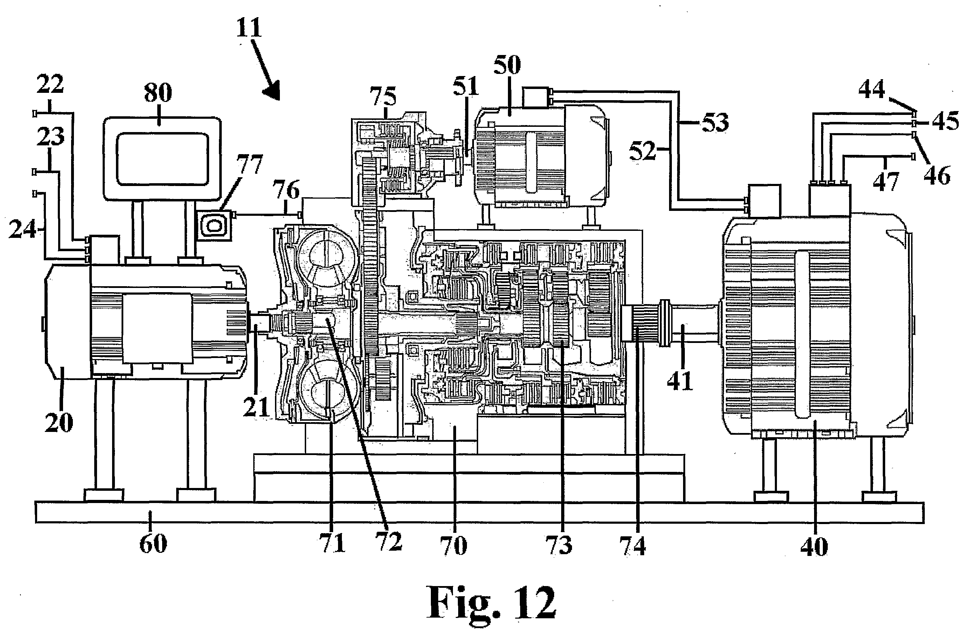

Turning to Fig. 12, wherein the electricity generation system 11, according to another embodiment of the present invention is shown. The system includes Prime Mover 20, Transmission Assembly 70, Electrical Generator in the form of a Meta-magnetic Effect Dynamo 40, Exciter 50, Platform 60, and a Control Unit with touch-screen display 80.

Prime Mover 20 is an AC (Alternating Current) Motor. The alternating current (AC) provided from an external power source is used to generate a mechanical torque by means of a rotating magnet in a coil of wire, or by a rotating coil of wire inside a powerful magnet. In either case, the generated mechanical torque is used to rotate the Shaft 21 of Prime Mover 20. Prime Mover 20 receives its AC input power via Input Power Cables 22 (Live L1), 23 (Live L2) and 24 (Live L3). While only one type of Prime Mover 20 is shown, in reality, the Prime Mover 20 can be a single phase Alternating Current (AC) Motor or a DC (Direct Current) Motor with a DC to AC Converter for its electrical input power.

The Input Power Cables 22 (Live L1), 23 (Live L2) and 24 (Live L3) of Prime Mover 20 can be connected to an external generator such as a fossil fuel-fired steam turbine, natural gas-fired steam turbine, a hydro-generator, a diesel engine, a petrol engine, a steam engine, a Fuel-cell Generator, an AC or DC generator that uses alternative sources of energy (such as solar, wind, hydro-electric, wave energy, or biomass), and any electricity generation unit that can provide the required AC or DC power to drive Prime Mover 20 used in the present invention.

Prime Mover 20 does not develop its full power when it is running slowly. It has to be rotating fairly fast before it develops its maximum power and torque. Thus, the Transmission Assembly 70 provides a mean to allow the Shaft 21 of Prime Mover 20 to revolve at high speed to produce the desired power on one hand and allow its Output Shaft 74 to turn at slower speed on the other hand to ensure Shaft 41 of Meta-magnetic Effect Dynamo 40 turns at 25 Hz or 30 Hz (due to the use of a four-pole Rotor that provides two cycles of voltage per revolution). The speed reduction is achieved via the Planetary Gear Set 73. Shaft 21 of Prime Mover 20 is connected to Shaft 72 of Torque Converter 71.

Torque Converter 71 serves as a fluid coupling device and it offers the following advantages: [a] Absence of direct mechanical contact between the driving and driven members minimizes the transmission of shock and torsional vibration between Prime Mover 20 and Transmission Assembly 70; [b] no positive disengagement or engagement of drive allows smoother starting characteristic; [c] protects against harmful labouring of Prime Mover 20 at low speed, since the fluid coupling will merely slip and allow Prime Mover 20 to increase speed when overloaded.

The Output Shaft 74 is coupled to Shaft 41 of Meta-magnetic Effect Dynamo 40. Power Take Off (PTO) 75 is coupled to Shaft 51 of Exciter 50.

Electronic Assembly (EA) 77, also known as Transmission Control Unit, is the brain of Transmission Assembly 70. It is connected to Transmission Assembly 70 via a Signal Cable 76. While only one type of Transmission Assembly 70 is shown, in reality, Transmission Assembly 70 can be manual, semi-automatic, or fully automatic. Transmission Assembly 70 also includes system that uses Frictional Clutch instead of Torque Converter 71. Transmission Assembly 70 can also have two or more PTOs 75 in its construction.

Exciter 50 is an Alternator that generates the DC power needed by Meta-magnetic Effect Dynamo 40. It consists of three major components: the rotor, the stator, and the rectifier bridge with regulator. The principle of AC generation in Alternator is motion between magnetic lines of force, and conductors will induce electrical pressure (AC Voltage). In the Alternator, the rotor will supply the magnetic lines of force, and PTO 75 spinning the rotor will supply the motion. The generated AC power is converted into DC power by the rectifier bridge with regulator. DC Power generated is supplied to Meta-magnetic Effect Dynamo 40 via Output Power Cable 53 (Positive DC Voltage) and Output Power Cable 52 (Ground). While only one type of Exciter 50 is shown, in reality, Exciter 50 can be any DC Power Source such as a battery or a fuel cell.

Meta-magnetic Effect Dynamo 40 is a synchronous machine that is driven by Output Shaft 74 of Transmission Assembly 70. It uses Meta-magnetic Effect to generate power from within the magnetic structure of its Stator 42.

Fig. 2 shows a perspective cross-sectional schematic view of Meta-magnetic Effect Dynamo 40. Two principal parts of a synchronous machine are magnetic structures. The stationary part that is essentially a hollow cylinder, called the Stator 42, has longitudinal slots in which there are coils of Stator 42's windings. These windings carry the current supplied to an electrical load. Rotor 43 is the part of the machine that is mounted on the shaft and rotates inside the hollow Stator 42. The winding on Rotor 43, called the field winding, is supplied with DC current from Exciter 50 via Output Power Cable 53 (Positive Voltage) and Output Power Cable 52 (Ground). In the present invention, Rotor 43 is a single, longitudinal block with a uniform four-pole cross section area as shown in Fig. 8.

Rotor 43 has four poles and two cycles of voltage are generated in each coil per revolution. Since the number of cycles per revolution equals the number of pairs of poles, the frequency of the generated voltage is derived from the following equation:

$$f = (P/2) * (N/60) = (P/2) * fm \ \ Hz$$

where,

f = electrical frequency in Hz (50 Hz or 60Hz)

P = number of poles

N = Rotor speed in revolutions per minutes (rpm)

fin = N/60, the mechanical frequency in revolutions per second (rps), it is the frequency of Shaft 41 driven by Output Shaft 74 of Transmission Assembly 70.

The enhanced beam of coherent Magnetic Field generated via metamagnetic interaction is converted into a strong current flow in Stator 42's Windings instantaneously. This strong instantaneous current flow enables the present invention to be used as a device for power stability in an electrical distribution network or in a national grid. When there is a larger load demand, the coherent nature of enhanced Magnetic Field enables additional electrical power to be generated with no change in phase angle or frequency (50 Hz or 60 Hz) and no change in output voltage. In this way, unanticipated output can be catered for and at the same time, unexpected power trip due to power instability can be avoided.

In the present invention, three-phase AC power is being generated and can be supplied to external loads via Output Power Cable 44 (Live L1), Output Power Cable 45 (Live L2), Output Power Cable 46 (Live L3), and Output Power Cable 47 (Neutral).

Control Unit with a touch-screen display 80 is the main brain for the electricity generation system 11. It is used for controlling the operations of the present invention such as the powering up sequence, and the shutting down sequence. The Control Unit has two communication ports with each support either RS-232C or RS-485 communication protocol. One port is used to input control sequence by connecting it to a Personal Computer or Laptop. The other is used to communicate with Electronic Assembly 77 of Transmission 70 via additional communication protocols such as SAE J1708, SAE J1587, SAE J1939, and CAN-bus Protocol.

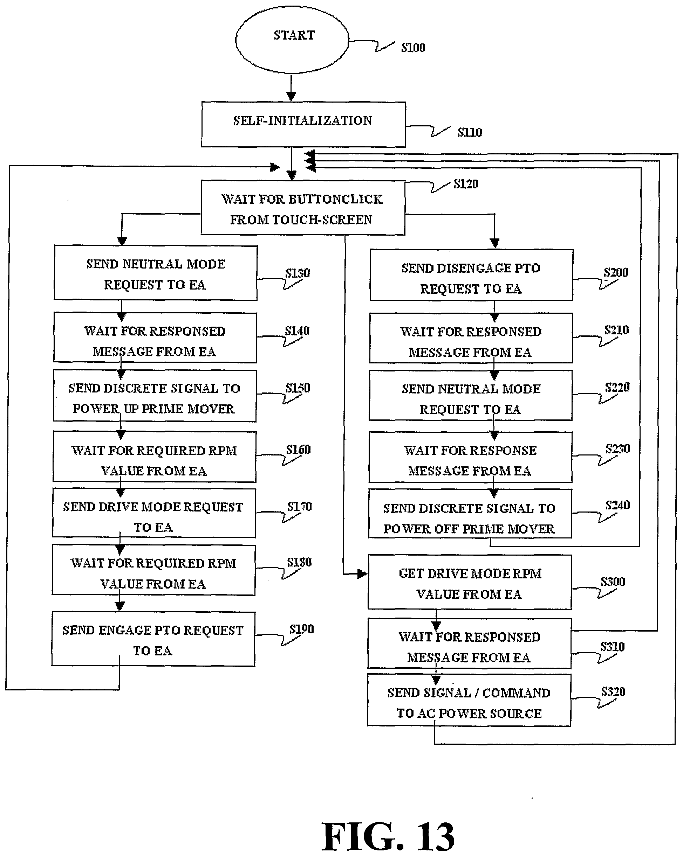

Fig. 13 shows a flow chart of the operation of the Control Unit with a touch-screen display 80. Upon power up, in step S100, Control Unit 80 performs an initialization in step S110 and waits for button click from its touch screen in step S120. Upon receiving a Power-ON button click from its touch-screen display in step S120, it sends a request command to Electronic Assembly 77 in step 130 to shift Transmission Assembly 70 to Neutral Mode. It waits for EA response message for successful neutral engagement in step S140. When valid response is received in S140, it issues a discrete signal to activate a Relay or a Switchgear in order to power up Prime Mover 20 in step S150. It waits for the required rpm value to attain in step S160. When required RPM is verified in step S160, Control Unit 80 sends a request command to Electronic Assembly 77 in step S 170 to shift Transmission Assembly 70 to Drive Mode. It waits for Output Shaft 74 to attain the required rpm value (25 Hz or 30 Hz due to the use of a four-pole Rotor that provides two cycles of voltage per revolution) in step S180. When the required rpm value for Output Shaft 74 is verified, it sends a request command to Electronic Assembly 77 in step 190 to engage PTO 75 in order to drive the Exciter 50. The Meta-magnetic Effect Generator 11 is fully functional after this step.

Upon receiving a Power-OFF button click from its touch-screen display in step S120, Control Unit 80 sends a request command to Electronic Assembly 77 in step S200 to disengage PTO 75 in order to stop Exciter 50 from operating. It waits for EA response message for successful PTO disengagement in step S210. When valid response is received in step S210, it sends request command to EA 77 in step S220 to shift Transmission Assembly 70 to Neutral Mode and waits for valid response in step S230. When valid response is received in step S230, it issues a discrete signal to deactivate a Relay or a Switchgear to cut-off input power supply to Prime Mover 20 in step S240.

A more efficient approach for Power-OFF is to insert a Relay or Switchgear between Output Power cable 53 and Output Power Cable 52 (not shown in diagram) as well as to include in step S200 an additional task of sending a discrete signal to disengage the Relay or Switchgear prior to the request command for disengaging PTO 75. In this manner, instantaneous power cut-off can be achieved in this present invention.

Control Unit 80 is mainly used for system start-up and shut down. It can also be used to match variations in external load when the system is not operating in Power Stability Zone. Control Unit 80 monitors variations in external load via changes in the required Drive Mode rpm value for Output Shaft 74. Upon receiving a Load-variation button click from its touch-screen display in step S120, it sends a request command to Electronic Assembly 77 in step S300 for the Drive Mode rpm value of Output Shaft 74. It waits for EA response message for Drive Mode rpm value in step S310. If valid rpm value is obtained in S310, it returns to step S120 to check whether Load-variation is still activated. If Load-variation button is still activated, steps S120, S300, and S310 are repeated for ongoing monitoring of Drive Mode rpm value. When variation is detected in S310, it enters step S320 to issue a discrete signal, an analog signal, or a command to the AC Power Source that is connected to the input power cables of Prime Mover 20 and instructs the AC Power Source to either increase or reduce the power supply to Prime Mover 20 in response to the load variations. It then returns to step S120 to check whether Load-variation button is still activated. If Load-variation button is still activated, steps S120, S300, S310, and S320 are repeated until the required Drive Mode rpm value for Output Shaft 74 is established and maintained.

Transmission Assembly 70 as a whole ensures the input power of the present invention is electrically isolated from its output power. Exciter 50 is driven mechanically by PTO 75. Shaft 41 of Meta-magnetic Effect Dynamo 40 is in turn driven mechanically by Output Shaft 74. Exciter 50 does not use the electrical output power of Stator 42. The fact that magnetic saturation sets in at the tip of each pole during Meta-magnetic Effect means that apart from the magneto-motive force needed to turn the Rotor 43, Rotor 43 is "isolated" from excess magnetic flux across the narrow air gap between the each pole and its adjacent Stator 42's region. Therefore, two electrical reference frames are established, one is DC Circuit (that includes Exciter 50 and Rotor 43) for generating the Magneto-motive Force needed by Rotor 43, and the other is the three-phase AC Circuit (that includes the Stator 42's windings and external loads) for generating the Electric Output Power needed by external electrical loads. The establishment of two Electrical Reference Frames in this present invention ensures Conservation of Electric Charge is preserved in each frame. Otherwise, discrepancy occurs when the electric charges in Rotor 43's field windings are less than (that is, not equal) to the electric charges in Stator 42's windings.

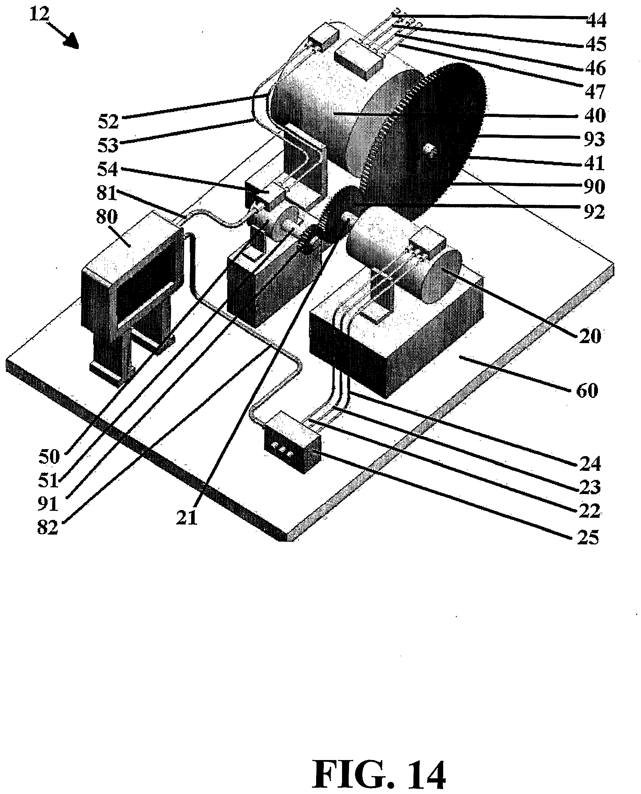

Turning to Fig. 14, wherein the electricity generation system 12, according to a further embodiment of the present invention is shown. The system includes Prime Mover 20, Gear Train Assembly 90 (with three Gears 91, 92, and 93), Electrical Generator in the form of a Meta-magnetic Effect Dynamo 40, Exciter 50, Platform 60, and a Control Unit with touch-screen display 80.

Prime Mover 20 is an AC (Alternating Current) Motor. The alternating current (AC) provided from an external power source is used to generate a mechanical torque by means of a rotating magnet in a coil of wire, or by a rotating coil of wire inside a powerful magnet. In either case, the generated mechanical torque is used to rotate the Shaft 21 of Prime Mover 20. Prime Mover 20 receives its AC input power via Input Power Cables 22 (Live L1), 23 (Live L2) and 24 (Live L3). While only one type of Prime Mover 20 is shown, in reality, the Prime Mover 20 can be a single-phase Alternating Current (AC) Motor or a DC (Direct Current) Motor with a DC to AC Converter for its electrical input power.

The Input Power Cables 22 (Live L1), 23 (Live L2) and 24 (Live L3) of Prime Mover 20 can be connected via an AC Input Power Switch Box 25 to an external generator such as a fossil-fired steam turbine, natural gas-fired steam turbine, a hydro-generator, a diesel engine, a petrol engine, a steam engine, a Fuel-cell Generator, an AC or DC generator that uses alternative sources of energy (such as solar, wind, hydro-electric, wave energy, or biomass), and any electricity generation unit that can provide the required AC or DC power to drive Prime Mover 20 used in the present invention.

Gear Train Assembly 90 provides a mechanical mean to connect Shaft 21 of Prime Mover 20 to Shaft 41 of Meta-magnetic Effect Dynamo 40. Its gear ratio enables Shaft 21 of Prime Mover 20 to revolve at high speed to produce the desired power on one hand and allow Shaft 41 of Meta-magnetic Effect Dynamo 40 to turn at slower speed at 25 Hz or 30 Hz (due to the use of a four-pole Rotor that provides two cycles of voltage per revolution).

In this embodiment, Gear 92 is threaded firmly and secured by a lock nut to the Shaft 21 of Prime Mover 20. Therefore, at system start-up, Prime Mover 20 and its Shaft 21 must be strong enough to overcome the inertia of Gear Train 90, inertia of Shaft 51 of Exciter 50, and inertia of Shaft 41 of Meta-magnetic Effect Dynamo 40 directly without slip. To prevent Shaft 21 of Prime Mover 20 from being twisted or breaking at start-up, Single Plate Clutch 100 may be deployed to connect Shaft 21 to Gear 92.

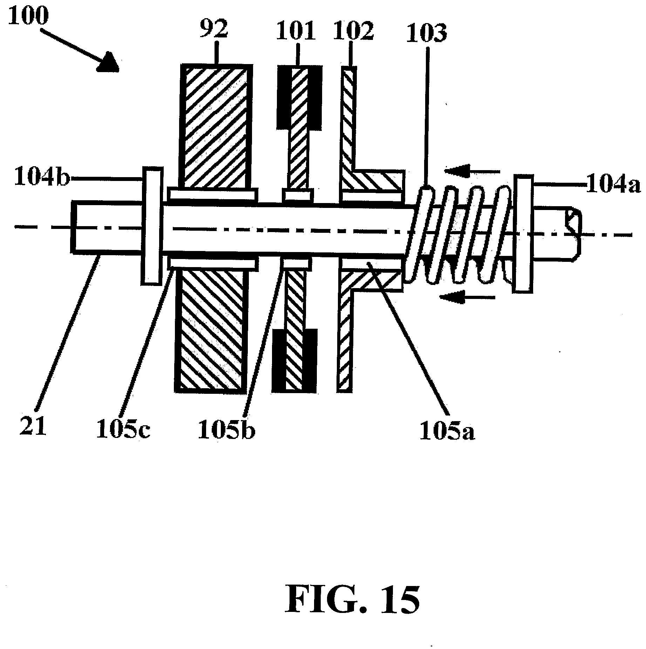

As shown in Fig. 15, Single Plate Clutch 100 is a device used to engage Shaft 21 and Gear 92 smoothly in relative motion during system start-up. It comprises a Friction Plate 101, a Pressure Plate 102, a Spring 103, and two Guards 104a and 104b. Both Guards are attached and secured firmly to the Shaft 21. Guard 104a is used to hold the Spring 103 in place and Guard 104b is used to hold Gear 92 in place. Shaft 21 serves as the driving member that is driven permanently by Prime Mover 20. Pressure Plate 102 rotates permanently with Shaft 21. It supplies the other unlined friction contact surface, and conveys the clamping force of Spring 103 to Shaft 21. Friction Plate 101 is the driven member. To accommodate wearing of the friction-lined Friction Plate 101 and the slip during system start-up, a certain amount of axial freedom must be provided for Gear 92. This axial freedom is achieved by attaching Gear 92, Friction Plate 101, and Pressure Plate 102 to Shaft 21 with Bush Bearing 105c, 105b, and 105a respectively so that they can float along Shaft 21 between the two Guards 104b and 104a. Pressure Plate 102 is produced from cast iron and is intentionally of rugged construction, it must neither distort under the loading of Spring 103 nor be unable to absorb and conduct away the heat generated during clutch engagement. Spring 103 is compressed between Pressure Plate 102 and Guard 104a. Its purpose is to maintain a sufficient clamping force between the friction surfaces of the Single Plate Clutch so that maximum torque from Shaft 21 can be transmitted to Gear 92 without slip occurring. Insulation washers (not shown in Fig. 15) maybe used to reduce heat transmission from Pressure Plate 102 to Spring 103. Friction Plate 101 is sandwiched between the friction contact surfaces of Gear 92 and Pressure Plate 102.

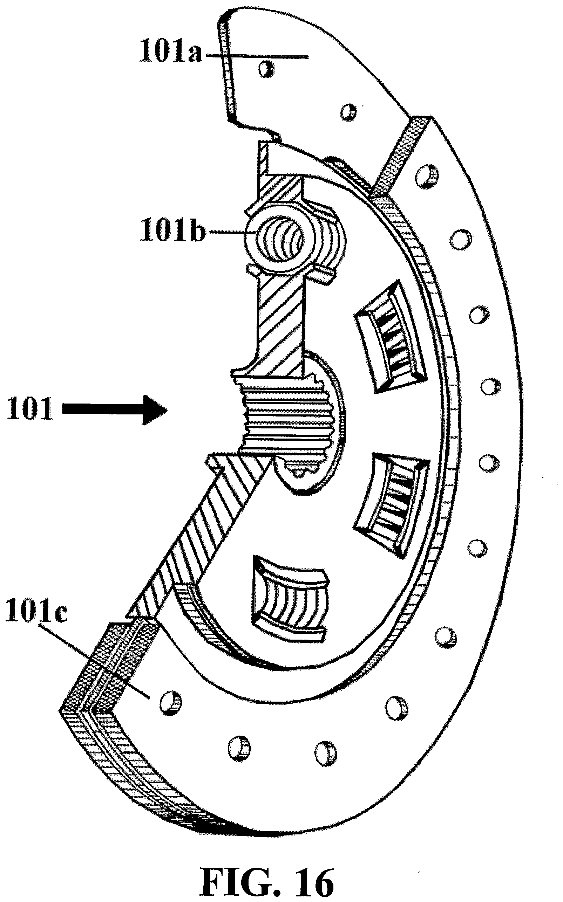

Fig. 16 shows the construction of Friction Plate 101. Each side of Friction Plate 101 is faced with a ring of friction material, known as Friction Lining 101c, which is secured by riveting to Borglite Segment 101 a. Torsional Damper-springs 101b are provided to permit smooth, gradual engagement.

Turning to Fig. 15, the purpose of fitting a Single Plate Clutch provides the following benefits: [a] Better engagement at system start-up, slight delay in the form of slip before full engagement enables Prime Mover 20 to have sufficient time to build up it speed, thereby, allowing shock-free connection between Shaft 21 and Gear 92; [b] the friction linings 101 c enables maximum torque transmission from Shaft 21 to Gear 92 at full engagement.

Turning to Fig. 14, Gear 91 is coupled to Shaft 51 of Exciter 50. Exciter 50 is an Alternator that generates the DC power needed by Meta-magnetic Effect Dynamo 40. It consists of three major components: the rotor, the stator, and the rectifier bridge with regulator. The principle of AC generation in Alternator is motion between magnetic lines of force, and conductors will induce electrical pressure (AC Voltage). In the Alternator, the rotor will supply the magnetic lines of force, and Gear 91 spinning the rotor will supply the motion. The generated AC power is converted into DC power by the rectifier bridge within the regulator. DC Power generated is supplied to Meta-magnetic Effect Dynamo 40 via Output Power Cable 53 (Positive Voltage) and Output Power Cable 52 (Ground). While only one type of Exciter 50 is shown, in reality, Exciter 50 can be any DC Power Source such as a battery or a fuel cell.

Meta-magnetic Effect Dynamo 40 is a synchronous machine that is driven by Gear 93 of Gear Train Assembly 90. It uses Meta-magnetic Effect to generate power from within the magnetic structure of its Stator 42.

Fig. 2 shows a perspective cross-sectional schematic view of Meta-magnetic Effect Dynamo 40. Two principal parts of a synchronous machine are magnetic structures. The stationary part that is essentially a hollow cylinder, called the Stator 42, has longitudinal slots in which there are coils of Stator 42's windings. These windings carry the current supplied to an electrical load. Rotor 43 is the part of the machine that is mounted on the shaft and rotates inside the hollow Stator 42. The winding on Rotor 43, called the field winding, is supplied with DC current from Exciter 50 via Output Power Cable 53 (Positive DC Voltage) and Output Power Cable 52 (Ground). In the present invention, Rotor 43 is a single, longitudinal block with a uniform four-pole cross sectional area as shown in Fig. 8.

Rotor 43 has four poles and two cycles of voltage are generated in each coil per revolution. Since the number of cycles per revolution equals the number of pairs of poles, the frequency of the generated voltage is derived from the following equation:

$$f = (P/2) * (N/60) = (P/2) * fm \ \ Hz$$

where,

f = electrical frequency in Hz (50 Hz or 60 Hz)

P = number of poles

N = Rotor speed in revolutions per minutes (rpm)

fm = N/60, the mechanical frequency in revolutions per second (rps), it is the frequency of Shaft 41 driven by Gear 93 of Gear Train Assembly 90 which is either 25 Hz or 30 Hz.

The enhanced beam of coherent Magnetic Fields generated via metamagnetic interaction is converted into a strong current flow in Stator 42's Windings instantaneously. This strong instantaneous current flow enables the present invention to be used as a device for power stability in an electrical distribution network or in a national grid. When there is a larger load demand, the coherent nature of enhanced Magnetic Field enables additional electrical power to be generated with no change in phase angle or frequency (50 Hz or 60 Hz) and no change in output voltage. In this way, unanticipated output can be catered for and at the same time, unexpected power trip due to power instability can be avoided.

In the present invention, three-phase AC power is being generated and can be supplied to external loads via Output Power Cable 44 (Live L1), Output Power Cable 45 (Live L2), Output Power Cable 46 (Live L3), and Output Power Cable 47 (Neutral).

Control Unit with a touch-screen display 80 is the main brain for the electricity generation system 12. It is used for controlling the operations of the present invention such as the powering up sequence, and the shutting down sequence. The Control Unit has two communication ports with each support either RS-232C or RS-485 communication protocol. One port is used to input control sequence by connecting it to a Personal Computer or Laptop. The other is used to communicate with the AC Power Source that is connected to Prime Mover 20. Besides, Control Unit 80 is connected to DC Output Power Switch Box 54 via Signal Cable 81. A Relay switch is installed (not shown in Fig 14) inside the DC Output Power Switch Box 54. Alternatively, the Signal Cable 81 is connected to the DC Output Power Switch Box 54 via a Switchgear. Besides, there is an RPM Sensor (not shown in Fig 14) mounted on Exciter 50 to read the rotational speed of Shaft 51. The rpm reading can be accessed from Signal Cable 81 via the DC Output Power Switch Box 54. Control Unit 80 is connected to AC Input Power Switch Box 25 via Signal Cable 82. A Relay Switch (not shown in Fig 14) and an AC to DC power converter (not shown in Fig 14) are installed inside the AC Input Power Switch Box 25. Control Unit 80 also receives DC input power from Signal Cable 82 from the AC to DC Power Converter installed inside the AC Input Power Switch Box 25.

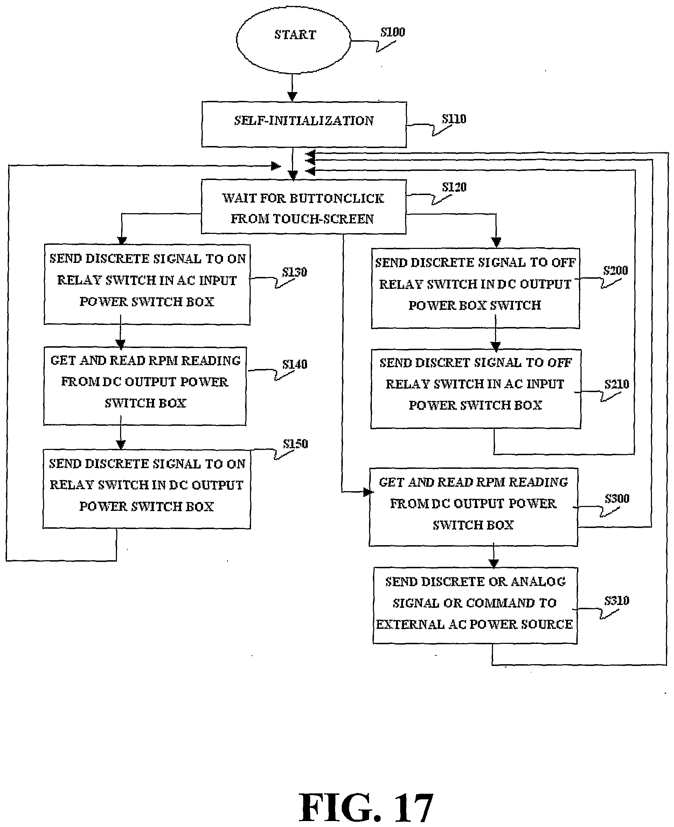

Fig. 17 shows a flow chart of the operation of the Control Unit with a touch-screen display 80. Upon power up, in step S100, Control Unit 80 performs an initialisation in step S110 and waits for button click from its touch screen in step S120.

Upon receiving a Power-ON button click from its touch-screen display in step S120, it sends a discrete signal to energise the Relay Switch in AC Input Power Switch Box 25 in step S130 to supply AC power to Prime Mover 20. It reads the RPM reading of Shaft 51 and derives the speed of Shaft 41 from the received rpm reading via gear-ratio conversion in step S140. It also waits for the desired speed of Shaft 41 to be established in this step. When the desired speed for Shaft 41 is obtained, it issues a discrete signal via Signal Cable 81 in step S 150 to energise the Relay Switch in DC Output Power Switch Box 54 (or Switchgear) to supply DC power via Power Cable 53 (Positive DC Voltage) and Power Cable 54 (Ground) to enable Faraday's Law of Electromagnetic Induction to take place inside Meta-magnetic Effect Dynamo 40. The Meta-magnetic Effect Generator 12 is fully functional after this step.

Upon receiving a Power-OFF button click from its touch-screen display in step S120, Control Unit 80 sends a discrete signal via Signal Cable 81 in step S200 to DC Output Power Switch Box 54 to deactivate the Relay Switch (or Switchgear) in order to cut off the DC supply which in turn disables the Meta-magnetic Effect Dynamo instantly as Faraday's Law of Electromagnetic Induction cannot take place immediately after that instance. It then issues a discrete signal via Signal Cable 82 in step S210 to AC Input Power Switch Box 25 to deactivate the Relay Switch in order to power off Prime Mover 20. Control Unit 80 continues to receive its DC power from the AC to DC Converter installed inside the AC Input Power Switch Box 25.

Control Unit 80 is mainly used for system start-up and shut down. It can also be used to match variations in external load when the system is not operating in Power Stability Zone. Control Unit 80 monitors variations in external load via changes in the required rpm value for Output Shaft 93. Upon receiving a Load-variation button click from its touch-screen display in step S120, it reads the RPM reading of Shaft 51 and derives the speed of Shaft 41 from the received rpm reading via gear-ratio conversion in step S300. If valid rpm value is obtained in S300, it returns to step S 120 to check whether Load-variation is still activated. If Load-variation button is still activated, steps S120 and S300 are repeated for ongoing monitoring of the rpm value for Shaft 93. When variation is detected in S300, it enters step S310 to issue a discrete signal, an analog signal via an additional Signal Cable (not shown in Fig. 14), or a command via the second serial communication port (not shown in Fig. 14) to an External AC Power Source that is connected to the input power cables of Prime Mover 20 and instructs the AC Power Source to either increase or reduce the power supply to Prime Mover 20 in response to the load variations. It then returns to step S120 to check whether Load-variation button is still activated. If Load-variation button is still activated, steps S120, S300, and S310 are repeated until the required rpm value for Shaft 93 is established and maintained.

Gear Train Assembly 90 as a whole ensures the input power of the present invention is electrically isolated from its output power. Exciter 50 is driven mechanically by Gear 91. Shaft 41 of Meta-magnetic Effect Dynamo 40 is in turn driven mechanically by Gear 93. Exciter 50 does not use the electrical output power of Stator 42. The fact that magnetic saturation sets in at the tip of each pole during Meta-magnetic Effect means that apart from the magneto-motive force needed to turn the Rotor 43, Rotor 43 is "isolated" from excess magnetic flux across the narrow air gap between the each pole and its adjacent Stator 42's region. Therefore, two electrical reference frames are established, one is DC Circuit (that includes Exciter 50 and Rotor 43) for generating the Magneto-motive Force needed by Rotor 43, and the other is the three-phase AC Circuit (that includes the Stator 42's windings and external loads) for generating the Electric Output Power needed by external electrical loads. The establishment of two Electrical Reference Frames in this present invention ensures Conservation of Electric Charge is preserved in each frame. Otherwise, discrepancy occurs when the electric charges in Rotor 43's field windings are less than (that is, not equal) to the electric charges in Stator 42's windings.

In the claims which follow except where the context requires, otherwise due to express language or necessary implication, the word "comprise", or variations such as "comprises" or "comprising" is used in an inclusive sense, i.e. to specify the presence of the stated features but not to preclude the presence or addition of further features in various embodiments of the invention

Modifications and improvements to the invention will be readily apparent to those skilled in the art. Such modifications and improvements are intended to be within the scope of this invention.

**Claims**

1. An electrical generator (40) comprising a stator (42) composed at least partly of a material having metamagnetic properties and having coil means connected to an external electrical load, and a rotor (43) having an electromagnet for generating a magnetic field therein, movement of the rotor and magnetic field relative to the stator, inducing electrical current flow in the coil means, the electromagnet configured to generate a magnetic field of sufficient strength to interact with a magnetic field associated with the external electrical load and induce metamagnetism within the metamagnetic material of the stator to increase electrical current flow within the coil means.

2. An electrical generator (40) according to claim 1, wherein the rotor (43) is composed at least partly of another material having non-metamagnetic properties, or wherein the other material has a higher magnetic permeability than the metamagnetic material, or wherein the other material has a fully saturated magnetic flux density irrespective of whether or not the metamagnetic material of the stator (42) has metamagnetism induced therein, or wherein the other material is any one or more of Permalloy, Silicon Iron, Pure Iron, Relay Steel or an iron equivalent.

3. An electrical generator (40) according to claim 1 or 2, wherein the angular velocity of the rotor (43) and thereby the frequency of the generated electrical current, remains substantially constant notwithstanding the induction of metamagnetism within the metamagnetic material of the stator (42), or wherein the electromagnet comprises first and second diametrically opposed pairs of poles, or wherein the poles have a cross-sectional area that applies a uniform beam of magnetic flux from each pole when the rotor is viewed in plan, and a uniform plane beam when the rotor is viewed in elevation.

4. An electrical generator (40) according to any one of claims 1 to 3, wherein the stator (42) is a substantially hollow cylinder with the coil means provided at selected locations on the interior wall thereof; or wherein the coil means are provided in longitudinally extending slots formed in the interior wall of the hollow cylinder, or wherein the coil means are operatively connected so as to generate alternating current of a selected phase, or wherein the coil means comprise parallel, insulated, untwisted, thin, and circular cross-sectional multi-strand wires located within the longitudinally extending slots in a manner that each wire is subjected to a uniform magnetic flux, or wherein the coil means are operatively connected so as to independently and simultaneously generate alternating current of two or more selected phases in response to two or more corresponding external electrical loads.

5. An electricity generation system (10) comprising:

    an electrical generator (40) according to any one of claims 1 to 4;
    energy supply means for supplying magnetic energy to the electromagnet and mechanical energy to the rotor (43), said magnetic and mechanical energy being supplied to the generator independently of the electrical current generated by the generator.

6. An electricity generation system (10) according to claim 5, wherein the energy supply means comprises:

    a motor; and
    a belt assembly operatively connecting the rotor (43) to the motor, rotating motion of the motor being transferred to the rotor via the belt assembly, or

a transmission assembly (70) operatively connecting the rotor to the motor, rotating motion of the motor being transferred to the rotor via the transmission assembly, or

a gear train assembly (90) operatively connecting the rotor to the motor, rotating motion of the motor being transferred to the rotor via the gear train assembly;

a DC power source driven by the gear train assembly; and

a relay switch or a Switchgear operatively connecting the electromagnet to the DC power source.

7. An electricity generation system (10) according to claim 5 or 6, further including an adjuster (36) for connecting the belt assembly, gear train (90) or transmission assembly (70), to the motor so as to overcome inertia of movable parts during system start-up, or wherein the adjustor is a clutch that is configured to selectively engage or disengage the motor to and from the belt assembly, gear train or transmission assembly, or wherein the clutch is a single plate clutch.

8. An electricity generation system (10) according to claim 5 or 6 further including a counterweight in the belt assembly, gear train (90) or transmission assembly (70) for ensuring that movable parts are in static and dynamic balance and to smooth out any jerk or slack encountered during motion of movable parts.

9. An integrated electricity generation system comprising two or more operatively connected electricity generation systems (10) according to claim 5 or 6, so as to increase the electrical output of a single unit and/or to provide power stability to selected parts of the electrical distribution network, or wherein the electricity generation systems are cascaded in series and/or connected in parallel.

10. An electrical generator (40) according to any one of claims 1 to 5 wherein the electrical generator is arranged to induce metamagnetism within the metamagnetic material of the stator (42) by using an instantaneous five-stage process to spontaneously and coherently increase electrical current flow within the coil means and wherein the instantaneous five-stage process comprises:

(i) a first stage comprising directing magnetic flux from the rotor (43) to the stator in accordance with Faraday's Law of Electromagnetic Induction;

(ii) a second stage, comprising directing additional magnetic flux from current flow in the coil means due to the presence of the external electrical load from the rotor to the stator;

(iii) a third stage, comprising forming a strong resultant magnetic flux directed from the rotor to the stator to penetrate the stator, by interacting magnetic flux from the first stage with the additional flux from the second stage;

(iv) a fourth stage, comprising generating a strong beam of coherent magnetic fields immediately within the material, by the resultant magnetic field causing the material of the stator having metamagnetic properties to enter a metamagnetic state and release additional coherent magnetic fields that trigger similar emissions in other magnetic atoms within the material; and

(v) a fifth stage, comprising instantaneously transforming the strong beam of coherent magnetic fields generated within the material of the stator in stage 4 into a strong current flow in the coil means of the stator, in accordance with Ampere's Law.

11. An electrical generator (40) according to claim 10 wherein the electrical generator is arranged to instantaneously stop the spontaneous and coherent increase of electrical current flow in the coil means by deactivating a relay or a Switchgear to terminate the electrical supply to the electromagnet notwithstanding ongoing movement of the rotor (43).

12. An electricity generation system (10) according to any one of claims 5 to 9, further including a control unit for system start-up and shutdown, and for matching variations in external electrical load when the system is not operating in a Power Stability Zone, wherein in the Power Stability Zone the angular velocity of the rotor remains substantially constant under different load conditions, or further including respective additional belts in the belt assembly, additional driveshafts in the transmission assembly (70), and additional gears in the gear train assembly (90), enabling the motor to drive two or more electrical generators (40) according to any one of claims 1 to 4.

13. An automotive engine or a marine vessel using an automotive engine including one or more electrical generators (40) according to any one of claims 1 to 4.

**Patentansprüche**

1. Elektrischer Generator (40) umfassend einen Stator (42), der mindestens teilweise aus einem Material mit metamagnetischen Eigenschaften besteht und Spulenmittel hat, die mit einer externen elektrischen Last verbunden sind, und einen Rotor (43), der einen Elektromagnet zum Erzeugen eines Magnetfelds darin hat, wobei eine Bewegung des Rotors und Magnetfelds relativ zum Stator einen Fluss elektrischen Stroms in die Spulenmittel induziert, der Elektromagnet konfiguriert ist, um ein Magnetfeld ausreichender Stärke zu erzeugen, um mit einem Magnetfeld zu interagieren, das mit der externen elektrischen Last verbunden ist und Metamagnetismus im metamagnetischen Material des Stators zu induzieren, um den Fluss elektrischen Stroms in den Spulenmitteln zu erhöhen.

2. Elektrischer Generator (40) nach Anspruch 1, wobei der Rotor (43) mindestens teilweise aus einem anderen Material besteht, das nicht-metamagnetische Eigenschaften hat, oder wobei das andere Material einer höhere magnetische Permeabilität hat als das metamagnetische Material, oder wobei das andere Material eine vollständig gesättigte Magnetflussdichte hat, unabhängig davon, ob das metamagnetische Material des Stators (42) einen darin induzierten Metamagnetismus hat, oder wobei das andere Material eines oder mehrere ist von Permalloy, Silicon Iron, Pure Iron, Relay Steel oder ein entsprechendes Eisen.

3. Elektrischer Generator (40) gemäß Anspruch 1 oder 2, wobei die Winkelgeschwindigkeit des Rotors (43) und damit die Frequenz des erzeugten elektrischen Stroms im Wesentlichen trotz der Induktion von Metamagnetismus in das metamagnetische Material des Stators (42) konstant bleibt, oder wobei der Elektromagnet erste und zweite diametral gegenüberliegende Polpaare umfasst, oder wobei die Pole eine Querschnittsfläche haben, die einen gleichförmigen Magnetflussstrahl von jedem Pol anwendet, wenn der Rotor eben zu sehen ist, und einen gleichförmigen Flachstrahl, wenn der Rotor erhaben zu sehen ist.

4. Elektrischer Generator (40) gemäß einem der Ansprüche 1 bis 3, wobei der Stator (42) im Wesentlichen ein Hohlzylinder ist, wobei die Spulenmittel an ausgewählten Stellen an der Innenwand davon bereitgestellt sind; oder wobei die Spulenmittel in sich längs erstreckenden Schlitzen bereitgestellt sind, die in der Innenwand des Hohlzylinders gebildet sind, oder wobei die Spulenmittel operativ so verbunden sind, dass sie Wechselstrom einer ausgewählten Phase erzeugen, oder wobei die Spulenmittel parallele, isolierte, unverdrillte, dünne und mehradrige Leiter mit kreisförmigem Querschnitt in den sich längs erstreckenden Schlitzen auf eine Weise umfassen, dass jeder Leiter einem gleichförmigen Magnetfluss ausgesetzt ist, oder wobei die Spulenmittel operativ so verbunden sind, dass sie unabhängig und gleichzeitig Wechselstrom von zwei oder mehreren ausgewählten Phasen als Antwort auf zwei oder mehrere entsprechende externe, elektrische Lasten erzeugen.

5. Stromerzeugungssystem (10) umfassend:

   einen elektrischen Generator (40) gemäß einem der Ansprüche 1 bis 4;
   Energiezuführungsmittel zum Zuführen magnetischer Energie zum Elektromagnet und mechanischer Energie zum Rotor (43), wobei die magnetische und mechanische Energie dem Generator unabhängig vom elektrischen Strom zugeführt wird, der vom Generator erzeugt wird.

6. Stromerzeugungssystem (10) gemäß Anspruch 5, wobei die Energiezuführungsmittel umfassen:

   einen Motor; und
   eine Riemeneinheit, die operativ den Rotor (43) mit dem Motor verbindet, wobei eine Drehbewegung des Motors über die Riemeneinheit zum Rotor übertragen wird, oder
   eine Antriebseinheit (70), die operativ den Rotor mit dem Motor verbindet, wobei eine Drehbewegung des Motors über die Antriebseinheit zum Rotor übertragen wird, oder
   eine Getriebeeinheit (90), die operativ den Rotor mit dem Motor verbindet, wobei eine Drehbewegung des Motors über die Getriebeeinheit zum Rotor übertragen wird;
   eine Gleichstromleistungsquelle, die von der Getriebeeinheit angetrieben wird; und
   einen Relaisschalter oder ein Schaltgerät, der/das den Elektromagnet operativ mit der Gleichstromleistungsquelle verbindet.

7. Stromerzeugungssystem (10) gemäß Anspruch 5 oder 6, ferner enthaltend einen Steller (36) zum Verbinden der Riemeneinheit, des Getriebes (90) oder der Antriebseinheit (70) mit dem Motor, um eine Trägheit beweglicher Teile beim Anfahren des Systems zu überwinden, oder wobei der Steller eine Kupplung ist, die konfiguriert ist, um den Motor selektiv mit der Riemeneinheit, dem Getriebe oder der Antriebseinheit in Eingriff zu bringen und davon zu trennen, oder wobei die Kupplung eine Einscheibenkupplung ist.

8. Stromerzeugungssystem (10) gemäß Anspruch 5 oder 6 ferner enthaltend ein Gegengewicht in der Riemeneinheit, im Getriebe (90) oder in der Antriebseinheit (70) um sicherzustellen, dass diese beweglichen Teile in statischem und dynamischem Gleichgewicht sind, und um jedes während der Bewegung der beweglichen Teile festgestellte Ruckeln oder Durchhang auszugleichen.

9. Integriertes Stromerzeugungssystem umfassend zwei oder mehrere operativ verbundene Stromerzeugungssysteme (10) gemäß Anspruch 5 oder 6, um den elektrischen Ausgang einer einzelnen Einheit zu erhöhen und/oder um ausgewählten Teilen des elektrischen Verteilernetzwerk Leistungsstabilität zu verleihen, oder wobei die Stromerzeugungssysteme in Reihe kaskadiert sind und/oder parallel geschaltet sind.

10. Elektrischer Generator (40) gemäß einem der Ansprüche 1 bis 5 wobei der elektrische Generator angeordnet ist, um Metamagnetismus in das metamagnetische Material des Stators (42) zu induzieren durch Verwendung eines unmittelbaren fünfstufigen Prozesses, um einen Fluss elektrischen Stroms in den Spulenmitteln eigenständig und kohärent zu erhöhen und wobei der unmittelbare fünfstufige Prozess umfasst:

(i) eine erste Stufe umfassend ein Richten eines Magnetflusses vom Rotor (43) zum Stator gemäß dem Faraday'schen Gesetz über elektromagnetische Induktion;
(ii) eine zweite Stufe umfassend ein Richten zusätzlichen Magnetflusses aus dem Stromfluss in den Spulenmitteln durch das Vorliegen einer externen elektrischen Last vom Rotor zum Stator;
(iii) eine dritte Stufe umfassend ein Bilden eines starken resultierenden Magnetflusses, der vom Rotor zum Stator gerichtet ist, um den Stator durch Interagieren des Magnetflusses aus der ersten Stufe mit dem zusätzlichen Fluss aus der zweiten Stufe zu penetrieren;
(iv) eine vierte Stufe umfassend ein Erzeugen eines starken Strahls kohärenter Magnetfelder direkt im Material, wobei das resultierende Magnetfeld veranlasst, dass das Material des Stators metamagnetische Eigenschaften hat, einen metamagnetischen Zustand annimmt, und zusätzliche kohärente Magnetfelder freisetzt, die ähnliche Emissionen in anderen magnetischen Atomen im Material auslösen; und
(v) eine fünfte Stufe umfassend ein unmittelbares Umwandeln des starken Strahls kohärenter Magnetfelder, die im Material des Stators in der Stufe 4 erzeugt werden, in einen starken Stromfluss in den Spulenmitteln des Stators gemäß dem Amperegesetz.

11. Elektrischer Generator (40) gemäß Anspruch 10, wobei der elektrische Generator angeordnet ist, den eigenständigen und kohärenten Anstieg des Flusses elektrischen Stroms in den Spulenmitteln durch Deaktivieren eines Relais oder eines Schaltgeräts unmittelbar zu stoppen, um die elektrische Zuführung zum Elektromagnet trotz fortgesetzter Bewegung des Rotors (43) zu beenden.

12. Stromerzeugungssystem (10) gemäß einem der Ansprüche 5 bis 9, ferner enthaltend eine Steuereinheit zum Anfahren und Abschalten des Systems und zum Ausgleichen von Variationen in einer externen elektrischen Last, wenn das System nicht in einem Leistungsstabilitätsbereich betrieben wird, wobei die Winkelgeschwindigkeit des Rotors im Leistungsstabilitätsbereich im Wesentlichen unter verschiedenen Lastbedingungen konstant bleibt, oder ferner enthaltend jeweilige zusätzliche Riemen, zusätzliche Antriebswellen in der Antriebseinheit (70), und zusätzliche Zahnräder in der Getriebeeinheit (90), um dem Motor zu ermöglichen, zwei oder mehrere elektrische Generatoren (40) gemäß einem der Ansprüche 1 bis 4 anzutreiben.

13. Fahrzeugmotor oder Schiff, das einen Fahrzeugmotor verwendet, enthaltend einen oder mehrere elektrische Generatoren (40) gemäß einem der Ansprüche 1 bis 4.

**Revendications**

1. Un générateur électrique (40) comprenant un stator (42) composé au moins en partie d'un matériau ayant des propriétés méta-magnétiques et ayant des passages de bobine reliés à une charge électrique externe, et un rotor (43) ayant un électro-aimant pour générer un champ magnétique dans celui-ci, le déplacement du rotor et du champ magnétique par rapport au stator, induisant un écoulement de courant électrique dans le passage de bobine, l'électro-aimant configuré pour générer un champ magnétique de résistance pour interagir avec un champ magnétique associé à la charge électrique externe et induire le méta-magnétisme dans le matériau méta-magnétique du stator pour augmenter l'écoulement de courant électrique à l'intérieur des passages de bobine.

**2.** Un générateur électrique (40) selon la revendication 1, dans laquelle le rotor (43) est composé au moins en partie d'un autre matériau aux propriétés non méta-magnétiques, ou dans laquelle l'autre matériau a une perméabilité magnétique plus élevée que le matériau méta-magnétique, ou dans laquelle l'autre matériau présente une densité de flux magnétique saturée, indépendamment du fait que le matériau méta-magnétique du stator (42) ait ou non un méta-magnétisme induit dans celui-ci, ou dans laquelle l'autre matériau est un ou plusieurs de Permalloy, Fer de Silicium, Fer Pur, Relais Acier ou un Fer Equivalent.

**3.** Un générateur électrique (40) selon la revendication 1 ou 2, dans laquelle la vitesse angulaire du rotor (43) et donc de la fréquence générée du courant électrique, reste sensiblement constante malgré l'induction de méta-magnétique dans le matériau méta-magnétique du stator (42), ou dans laquelle l'électro-aimant comprend des premières et secondes paires de polaires diamétralement opposées, ou dans laquelle les pôles ont une section transversale qui applique un faisceau de flux magnétiques de chaque pôle lorsque le rotor est vu en plan et un uniforme lorsque le rotor est vu en élévation.

**4.** Un générateur électrique (40) selon l'une quelconque des revendications 1 à 3, dans lesquelles le stator (42) est un cylindre sensiblement creux avec les passages de bobine prévus à des emplacements sélectionnés sur la paroi intérieure de celui-ci ; ou dans lesquelles les passages de bobine sont prévus dans des fentes s'étendant longitudinalement formées dans la paroi intérieure du creux cylindre, ou dans lequel les passages de bobine sont connectés de manière fonctionnelle ou de manière à générer le courant alternatif d'une phase sélectionnée, ou dans lesquelles les passages de bobine comprennent des fils multibrins parallèles, isolés, non torsadés, minces et circulaires situés à l'intérieur des fentes s'étendant d'une manière longitudinalement telle que chaque fil est soumis à un flux magnétique uniforme, ou dans lesquelles les passages de bobine sont fonctionnellement reliés de façon à générer indépendamment et simultanément le courant alternatif de deux ou plusieurs phases sélectionnées en réponse à deux ou davantage de charges électriques externes correspondantes.

**5.** Un système de génération d'électricité (10) comprenant :

un générateur électrique (40) selon l'une quelconque des revendications 1 à4;
des passages d'alimentation en énergie pour fournir de l'énergie magnétique à
l'électro-aimant et de l'énergie mécanique au rotor (43), ladite énergie magnétique et mécanique étant fournie au générateur indépendamment du courant électrique généré par le générateur.

**6.** Un système de génération d'électricité (10) selon la revendication 5, dans laquelle l'énergie d'alimentation comprend :

un moteur ; et
un montage ceinturier reliant fonctionnellement le rotor (43) au moteur,
le mouvement de rotation du moteur étant transféré au rotor l'intermédiaire du montage de la courroie, ou
un montage de transmission (70) reliant fonctionnellement le rotor au moteur, le mouvement de rotation du moteur étant transféré au rotor par l'intermédiaire du montage de la transmission, ou
Un montage de train d'engrenages (90) reliant de manière opérationnelle le rotor au moteur,
Le mouvement de rotation du moteur étant transféré au rotor par l'intermédiaire du train d'engrenages monté ;
une source de DC continu commandée par le montage de train d'engrenages ; et
un interrupteur à relais ou un tableau de commutation reliant l'électro-aimant la source de DC.

**7.** Un système de génération d'électricité (10) selon la revendication 5 ou 6, comprenant en outre un dispositif de réglage (36) pour relier le montage ceinturier, le train d'engrenages (90) ou de transmission (70), au moteur de façon à surmonter l'inertie de l'élément mobile pendant le démarrage du système, ou dans lequel l'ajusteur est un embrayage qui est configuré pour engager sélectivement ou désengager le moteur vers et à partir du montage ceinturier, l'embrayage ou montage de transmission, ou dans lequel l'embrayage est un seul embrayage à plaques.

**8.** Un système de génération d'électricité (10) selon la revendication 5 ou 6, comprenant en outre un contrepoids dans le montage ceinturier, un train d'engrenages (90) ou un montage de transmission (70) pour assurer que les parties mobiles sont dans un équilibre statique et dynamique et lisser toute secousse rencontrée lors du mouvement de pièces mobiles.

**9.** Un système intégré de production d'électricité comprenant au moins deux ou davantage de systèmes de génération d'électricité fonctionnellement connectés (10) selon la revendication 5 ou 6, en vue d'augmenter la puissance électrique d'une seule unité et / ou de fournir une stabilité sélectionnée du réseau de distribution électrique, ou dans lequel la génération d'électricité est montée en cascade en série et / ou connectée en parallèle.

10. Un générateur électrique (40) selon l'une quelconque des revendications 1 à 5 dans laquelle le générateur électrique est rangé pour induire le méta-magnétisme entre les matériaux méta-magnétiques du stator (42) en utilisant un processus instantané à cinq niveaux pour augmenter de manière spontanée et cohérente l'écoulement du courant électrique entre les passages de bobine et dans lesquels le processus instantané à cinq niveaux est compris :

(i) un premier niveau comprenant un flux magnétique de direction à partir du rotor (43) au stator en accord avec la Loi de Faraday sur l'Induction Electromagnétique ;
(ii) le second niveau comprenant un flux magnétique additionnel de direction à partir de l'écoulement du courant dans les passages de bobine au regard de la présence de la charge électrique externe du rotor au stator ;
(iii) un troisième niveau comprenant la formation d'un flux magnétique de forte résultante dirigée à partir du rotor au stator pour pénétrer le stator, en interagissant le flux magnétique à partir du premier niveau avec le flux additionnel à partir du second niveau ;
(iv) un quatrième niveau, comprenant la génération d'un fort faisceau lumineux de champs magnétiques cohérents immédiatement dans le matériau, par la résultante de champs magnétiques poussant le matériau du stator revêtir des propriétés méta-magnétiques dans l'état méta-magnétique et à relâcher des champs magnétiques cohérents additionnels qui occasionnent des émissions similaires dans d'autres atomes magnétiques dans le matériau ; et
(v) un cinquième niveau comprenant la transformation instantanée du fort faisceau lumineux de champs magnétiques cohérents générés dans le matériau du stator dans le niveau 4 dans un fort écoulement de courant dans les passages de bobine du stator, en accord à la Loi d'Ampère.

11. Un générateur électrique (40) selon la revendication 10 dans laquelle le générateur électrique est rangé pour arrêter instantanément l'augmentation cohérente et spontanée de l'écoulement du courant électrique dans les passages de bobine en désactivant un disjoncteur ou un stoppeur de vitesse pour terminer l'alimentation électrique à l'électro-aimant malgré le mouvement progressif du rotor (43).

12. Un système de génération électrique (10) selon une quelconque des revendications 5 à 9, incluant en outre une unité de contrôle pour le démarrage et l'arrêt du système, et pour identifier les variations dans la charge électrique externe quand le système n'est pas en marche dans une Zone de Stabilité d'Energie, dans laquelle, dans la Zone de Stabilité d'Energie, la vitesse angulaire du rotor reste substantiellement constante sous différentes conditions de charge, ou incluant en outre des ceintures additionnelles respectives dans le montage ceinturier, les cames dans le montage de transmission (70), et engrenages additionnels dans le montage du train d'engrenage (90), permettant au moteur d'entrainer deux ou plus de générateurs (40) par rapport à une quelconque des revendications 1 à 4.

13. Un engin auto-motif ou un tube marin utilisant un engin auto-motif incluant un ou plus de générateurs électriques (40) selon une quelconque des revendications 1 à 4.

**FIG. 1**

FIG. 2

**FIG. 3**

**FIG. 4**

FIG. 5

**FIG. 6**

$E_1$ ⎯⎯⎯⎯⎯⎯⎯⎯⎯⎯⎯⎯⎯⎯⎯⎯⎯⎯⎯⎯

$H$

$H$

$H$

$E_0$ ⎯⎯⎯⎯⎯⎯⎯⎯⎯⎯⎯⎯⎯⎯⎯⎯⎯⎯⎯⎯

*Stimulated Emission*

**FIG. 7**

**FIG. 8**

**FIG. 9**

FIG. 10

**FIG. 11**

Fig. 12

START — S100

SELF-INITIALIZATION — S110

WAIT FOR BUTTONCLICK FROM TOUCH-SCREEN — S120

SEND NEUTRAL MODE REQUEST TO EA — S130

WAIT FOR RESPONSED MESSAGE FROM EA — S140

SEND DISCRETE SIGNAL TO POWER UP PRIME MOVER — S150

WAIT FOR REQUIRED RPM VALUE FROM EA — S160

SEND DRIVE MODE REQUEST TO EA — S170

WAIT FOR REQUIRED RPM VALUE FROM EA — S180

SEND ENGAGE PTO REQUEST TO EA — S190

SEND DISENGAGE PTO REQUEST TO EA — S200

WAIT FOR RESPONSED MESSAGE FROM EA — S210

SEND NEUTRAL MODE REQUEST TO EA — S220

WAIT FOR RESPONSE MESSAGE FROM EA — S230

SEND DISCRETE SIGNAL TO POWER OFF PRIME MOVER — S240

GET DRIVE MODE RPM VALUE FROM EA — S300

WAIT FOR RESPONSED MESSAGE FROM EA — S310

SEND SIGNAL / COMMAND TO AC POWER SOURCE — S320

# FIG. 13

34

**FIG. 14**

**FIG. 15**

101a

101b

101

101c

# FIG. 16

FIG. 17